# EUROPÄISCHE PATENTANMELDUNG

(11) **EP 2 520 596 A1**
(43) Veröffentlichungstag der Anmeldung: **07.11.2012**
(21) Anmeldenummer: 12179005.9
(22) Anmeldetag: 28.01.2009
(51) Int. Cl.: C08F 226/06

(54) **Lineares Fällungspolymerisat**

(30) Priorität: 01.02.2008 EP 08150949
(62) Teilanmeldung aus: 09706844.9
(71) Anmelder: BASF SE, 67056 Ludwigshafen (DE)
(72) Erfinder: Nguyen Kim, Son, 69502 Hemsbach (DE); Fast, Ina, 67227 Frankenthal (DE)
(74) Vertreter: Reinhardt, Jürgen

(57) **Zusammenfassung**

Die vorliegende Erfindung betrifft Fällungspolymerisate erhältlich durch Polymerisation einer Monomermischung, die 30 bis 99 Gew.-% wenigstens eines nichtionischen wasserlöslichen Monomers a) und wenigstens ein von a) verschiedenes Monomer b) ausgewählt aus i) anionischen Monomeren und ii) Mischungen aus i) und wenigstens eine Hydroxylgruppe tragenden Monomeren, gegebenenfalls ein wenigstens eine Aminogruppe tragendes Monomer c), gegebenenfalls weitere Monomere, wobei die Gesamtmenge von a), b), c) und d) 100 Gew.-% beträgt und wobei die Monomermischung, bezogen auf die Gesamtmenge von a), b), c) und d) weniger als 0,1 Gew.-% eines Monomeren mit wenigstens 2 radikalisch polymerisierbaren Doppelbindungen pro Molekül enthält.. Die Erfindung betrifft weiterhin die Verwendung dieser Polymere als Rheologiemodifizierungsmittel für wässrige Zusammensetzungen, wässrige Zusammensetzungen enthaltend diese Polymere sowie die Verwendung der Polymere zur Verdickung von kosmetischen und pharmazeutischen Zubereitungen.

## Beschreibung

Die vorliegende Erfindung betrifft Fällungspolymerisate erhältlich durch Polymerisation einer Monomermischung, die 30 bis 99 Gew.-% wenigstens eines nichtionischen wasserlöslichen Monomers a) und wenigstens ein von a) verschiedenes Monomer ausgewählt aus i) anionischen Monomeren und Mischungen aus i) und wenigstens eine Hydroxylgruppe tragenden Monomeren, gegebenenfalls ein wenigstens eine Aminogruppe tragendes Monomer c), gegebenenfalls weitere Monomere, wobei die Gesamtmenge von a), b), c) und d) 100 Gew.-% beträgt und wobei die Monomermischung, bezogen auf die Gesamtmenge von a), b), c) und d) weniger als 0,1 Gew.-% eines Monomeren mit wenigstens 2 radikalisch polymerisierbaren Doppelbindungen pro Molekül enthält. Die Erfindung betrifft weiterhin die Verwendung dieser Polymere als Rheologiemodifizierungsmittel für wässrige Zusammensetzungen, wässrige Zusammensetzungen enthaltend diese Polymere sowie die Verwendung der Polymere zur Verdickung von kosmetischen und pharmazeutischen Zubereitungen.

An kosmetische, pharmazeutische und technische Mittel werden häufig spezielle Anforderungen bezüglich ihrer rheologischen Eigenschaften gestellt. Häufig können sie nur mit Hilfe von Zusatzstoffen, so genannten Verdickern, in die gewünschte Anwendungsform gebracht werden. Beispiele für übliche niedermolekulare Verdickungsmittel sind z. B. die Alkali- und Aluminiumsalze von Fettsäuren, Fettalkohole oder Wachse. Die Verwendung der bekannten Verdickungsmittel ist jedoch, je nach Einsatzgebiet der zu verdickenden Zubereitung, häufig mit Nachteilen verbunden. So kann entweder die Verdickungswirkung der Verdickungsmittel nicht zufriedenstellend, ihr Einsatz unerwünscht oder ihre Einarbeitung in die zu verdickende Zubereitung, beispielsweise wegen ihrer Unverträglichkeit mit der zu verdickenden Verbindung erschwert oder ganz unmöglich sein. Ein häufig auftretender weiterer Nachteil beim Einsatz von Polymeren als Verdickungsmittel zur Herstellung von höherviskosen bzw. gelartigen Zubereitungen ist, dass mit zunehmendem Molekulargewicht des Polymers dessen Einarbeitung im Allgemeinen schwerer wird, und dass schließlich oftmals nur eine Quellung des Polymers anstatt der angestrebten Lösung zu beobachten ist.
Schwierigkeiten bereitet oft die Bereitstellung von Produkten mit einem komplexen Eigenschaftsprofil unter Einsatz eines möglichst geringen Anteils oder möglichst wenig verschiedener wirkaktiver Substanzen.
Es besteht ein Bedarf an Polymeren für kosmetische und andere Mittel, die über gute konditionierende Eigenschaften verfügen, d. h. die sensorischen Eigenschaften der sie enthaltenden Mittel positiv beeinflussen, und gleichzeitig eine Einstellung der rheologischen Eigenschaften der Mittel ermöglichen. Insbesondere sollen die eingestellten rheologischen Eigenschaften auch bei hohen Salz- und/oder Tensidgehalten weitgehend stabil sein. An kosmetische und pharmazeutische Produkte werden vom Verbraucher zunehmend auch ästhetische Anforderungen gestellt. So werden Produkte bevorzugt, die weitgehend klare, transparente Formulierungen erlauben. Es besteht ein Bedarf an kosmetisch und pharmazeutisch verträglichen Polymeren, die geeignet sind, ein bestimmtes Eigenschaftsprofil bezüglich der sensorischen Eigenschaften und der Rheologie bereit zu stellen. Diese sollen sich idealerweise in Pulver überführen lassen und dennoch in der Lage sein, sich in kurzer Zeit in eine Zusammensetzung einarbeiten zu lassen und dabei zuverlässig die gewünschten Rheologieeigenschaften bewirken.

WO 00/39176 beschreibt ein hydrophiles, kationisches, ampholytisches Copolymer, das 0,05 bis 20 Mol-% eines anionischen Monomers mit wenigstens einer Carboxylgruppe, 0 bis 45 Mol-% eines kationischen Monomers mit wenigstens einer Aminogruppe sowie gegebenenfalls ein hydrophobes Monomer und/oder einen Vernetzer einpolymerisiert enthält, wobei das Molverhältnis von kationischem zu anionischem Monomer etwa 2:1 bis 16:1 beträgt. Diese Copolymere können u. a. zur Modifizierung rheologischer Eigenschaften von Körperpflegemitteln eingesetzt werden.

US 3,915,921 beschreibt Copolymere, die eine olefinisch ungesättigte Carbonsäure, ein C₁₀-C₃₀-Alkyl(meth)acrylat und gegebenenfalls ein vernetzendes Monomer mit wenigstens zwei ethylenisch ungesättigten Doppelbindungen einpolymerisiert enthalten. In neutralisierter Form dienen sie als Verdicker für diverse Anwendungen.

WO 97/21744 beschreibt vernetzte anionische Copolymere und deren Verwendung als Verdickungs- und Dispergiermittel in wässrigen Systemen.

EP-A-0 982 021 beschreibt die Verwendung von (teil)neutralisierten Copolymerisaten aus
A) 50 bis 99 Gew.-% monoethylenisch ungesättigten Carbonsäuren und
B) 1 bis 50 Gew.-% mindestens eines Comonomers, ausgewählt unter
a) monoethylenisch ungesättigten Carbonsäureestern mit gesättigten C₈-C₃₀-Alkoholen,
b) N-C₈-C₁₈-Alkyl- und N,N-Di-C₈-C₁₈-alkylcarbonsäureamiden,
c) Vinylestern aliphatischer C₈-C₃₀-Carbonsäuren, C₈-C₁₈-Alkylvinylethern, und
d) Mischungen davon als Verdicker zur Herstellung von Haarwaschmitteln.

In US 4,395,524 und US 4,432,881 werden als Verdicker wirksame Copolymere auf Basis von Amidgruppen-haltigen Monomeren beschrieben.

DE-A-42 13 971 beschreibt Copolymere, die wenigstens ein olefinisch ungesättigtes Säuregruppen-haltiges Monomer, wenigstens eine olefinisch ungesättigte quartäre Ammoniumverbindung, gegebenenfalls wenigstens ein Polyether(meth)acrylat und gegebenenfalls wenigstens einen Vernetzer einpolymerisiert enthalten und deren Verwendung als Verdickungsmittel zur Verdickung wässriger Systeme bei denen es sich um kosmetische Zubereitungen handeln kann.

EP-A-893 117 und EP-A-913 143 beschreiben vernetzte kationische Copolymere und deren Verwendung u. a. als haarfestigende Gelbildner in kosmetischen Zusammensetzungen.

EP-A-1 064 924 beschreibt die Verwendung von vernetzten kationischen Polymeren in hautkosmetischen und dermatologischen Zubereitungen, u. a. als Verdicker.

US 5,015,708 beschreibt ein Verfahren zur Herstellung eines Terpolymers aus (i) einem Vinyllactam, (ii) einem Säuregruppen-haltigen Monomer und (iii) einem hydrophoben Monomer, wobei es sich u. a. um eine ethylenisch ungesättigte Siliconverbindung handeln kann, durch Fällungspolymerisation sowie die Herstellung von Pulvern aus diesen Polymeren.

WO 01/62809 beschreibt ein kosmetisches Mittel, das wenigstens ein wasserlösliches oder wasserdispergierbares Polymer enthält, das
a) 5 bis 50 Gew.-% wenigstens eines ethylenisch ungesättigten Monomers mit einer tert.-Butylgruppe,
b) 25 bis 90 Gew.-% wenigstens eines N-Vinylamids und/oder N-Vinyllactams,
c) 0,5 bis 30 Gew.-% wenigstens einer Verbindung mit einer radikalisch polymerisierbaren, ethylenisch ungesättigten Doppelbindung und mindestens einer kationogenen und/oder kationischen Gruppe pro Molekül, und
d) 0 bis 30 Gew.-% wenigstens einer weiteren ethylenisch ungesättigten Verbindung, wobei es sich um Verbindungen mit mindestens einer anionogenen und/oder anionischen Gruppe pro Molekül handeln kann, eingebaut enthält.
   WO 04/058837 beschreibt ein ampholytisches Copolymer, das durch radikalische Copolymerisation von
   a) wenigstens einer ethylenisch ungesättigten Verbindung mit mindestens einer anionogenen und/oder anionischen Gruppe,
   b) wenigstens einer ethylenisch ungesättigten Verbindung mit mindestens einer kationogenen und/oder kationischen Gruppe,
   c) wenigstens einer ungesättigten amidgruppenhaltigen Verbindung sowie gegebenenfalls weiterer Comonomere erhältlich ist. Die Polymerisation kann in Gegenwart einer Pfropfgrundlage erfolgen, wobei es sich u. a. um ein Polyalkylenoxidhaltiges Siliconderivat handeln kann. Beschrieben sind weiterhin Polyelektrolyt-Komplexe, die ein solches ampholytisches Copolymer enthalten sowie kosmetische oder pharmazeutische Mittel auf Basis dieser Silicongruppen-haltigen Copolymere und Polyelektrolyt-Komplexe.
   WO 07/012610 beschreibt ein Silicongruppen-haltiges Copolymer A) erhältlich durch radikalische Copolymerisation von
   a) wenigstens einer Verbindung mit einer radikalisch polymerisierbaren, ethylenisch ungesättigten Doppelbindung und mindestens einer ionogenen und/oder ionischen Gruppe pro Molekül,
   b) wenigstens einer radikalisch polymerisierbaren vernetzenden Verbindung, die wenigstens zwei ungesättigte Doppelbindungen pro Molekül enthält, in Gegenwart wenigstens einer eine Polyethergruppe und/oder eine radikalisch polymerisierbare olefinisch ungesättigte Doppelbindung enthaltenden Siliconverbindung c).
      WO 07/010035 beschreibt die Verwendung eines ampholytischen Copolymers, das einen molaren Überschuss an anionogenen/anionischen Gruppen gegenüber kationogenen/kationischen Gruppen aufweist oder das einen molaren Überschuss an kationogenen/kationischen Gruppen gegenüber anionogenen/anionischen Gruppen aufweist und das erhältlich ist durch radikalische Copolymerisation von
      a1) wenigstens einer Verbindung mit einer radikalisch polymerisierbaren, ethylenisch ungesättigten Doppelbindung und mindestens einer anionogenen und/oder anionischen Gruppe pro Molekül,
      a2) wenigstens einer Verbindung mit einer radikalisch polymerisierbaren, ethylenisch ungesättigten Doppelbindung und mindestens einer kationogenen und/oder kationischen Gruppe pro Molekül,
      b) wenigstens einer radikalisch polymerisierbaren vernetzenden Verbindung, die wenigstens zwei ethylenisch ungesättigte Doppelbindungen pro Molekül enthält,
      c) gegebenenfalls in Gegenwart wenigstens einer eine Polyethergruppe und/oder eine radikalisch polymerisierbare olefinisch ungesättigte Doppelbindung enthaltenden Siliconverbindung,
         als Rheologiemodifizierungsmittel für haarkosmetische Zusammensetzungen.

Der vorliegenden Erfindung liegt die Aufgabe zu Grunde, neue Polymere zur Verfügung zustellen, die sich zur Modifizierung der rheologischen Eigenschaften von kosmetischen, pharmazeutischen und weiteren Zusammensetzungen eignen. Insbesondere sollen sich diese Polymere in eine feste Form, vorzugsweise ein Pulver, überführen lassen, das sich leicht in die zu verdickenden Formulierungen einarbeiten lässt. Des Weiteren sollen die bereitgestellten Polymere weitere anwendungstechnische Eigenschaften der mit ihnen modifizierten Zusammensetzungen, insbesondere deren sensorische Eigenschaften, verbessern.
Es besteht insbesondere ein Bedarf an polymeren Verdickern für haarkosmetische Zusammensetzungen, die sich zur Formulierung von gelförmigen Präparaten eignen. Diese sollen möglichst viele der folgenden Eigenschaften in sich vereinen:
- die erhaltenen Gele sollen möglichst klar sein,
- die erhaltenen Gele sollen sich leicht im Haar verteilen lassen und diesem guten Halt verleihen, was sich besonders gut durch Gele mit thixotropen Eigenschaften erzielen lässt,
- die erhaltenen Gele sollen selbst über filmbildende Eigenschaften verfügen und so zur Festigung der Haare beitragen,
- die erhaltenen Gele sollen über konditionierende Eigenschaften verfügen und die sensorischen Eigenschaften des Haars verbessern, z. B. ihm Geschmeidigkeit und Glanz verleihen und nach dem Trocken nicht oder nur gering klebrig sein,
- das mit den erhaltenen Gelen behandelte Haar soll eine gute Nasskämmbarkeit aufweisen (somit lässt sich das frisch behandelte Haar leicht mit dem Kamm in Form bringen, um die gewünschte Frisur zu formen),
- die Polymere sollen es erlauben, dass in möglichst allen kosmetisch akzeptablen pH-Bereichen, speziell im pH-Bereich von etwa 3 bis 9 Gele formuliert werden können,
- die Polymere sollen die Formulierung von Gelen erlauben, deren Eigenschaften über den pH-Wert schaltbar sind,
- die Polymere sollen gemeinsam formulierbar sein mit Verdickern, deren molekulare Ladung das gleiche Vorzeichen trägt.

Überraschend wurde gefunden, dass diese Aufgaben gelöst werden durch Polymere erhältlich durch Fällungspolymerisation einer Monomermischung, die umfasst
a) 30 bis 99 Gew.-% wenigstens eines nichtionischen wasserlöslichen Monomers
b) wenigstens ein von a) verschiedenes Monomer ausgewählt aus
   i) anionischen Monomeren,
   ii) Mischungen aus i) und wenigstens eine Hydroxylgruppe tragenden Monomeren,
c) gegebenenfalls ein wenigstens eine Aminogruppe tragendes Monomer,
d) gegebenenfalls weitere Monomere,
wobei die Gesamtmenge von a), b), c) und d) 100 Gew.-% beträgt und wobei die Monomermischung, bezogen auf die Gesamtmenge von a), b), c) und d) weniger als 0,1 Gew.-% eines Monomeren mit wenigstens 2 radikalisch polymerisierbaren Doppelbindungen pro Molekül enthält.

Bevorzugte erfindungsgemäße Polymere sind erhältlich durch Fällungspolymerisation einer Monomermischung, die umfasst
a) 30 bis 99 Gew.-% wenigstens eines nichtionischen wasserlöslichen Monomers
b) wenigstens ein von a) verschiedenes Monomer ausgewählt aus
   i) anionischen Monomeren,
   ii) Mischungen aus i) und wenigstens eine Hydroxylgruppe tragenden Monomeren,
      mit der Maßgabe, dass die Monomermischung weiterhin
c) wenigstens ein wenigstens eine Aminogruppe tragendes Monomer enthält,
d) gegebenenfalls weitere Monomere,
   wobei die Gesamtmenge von a), b), c) und d) 100 Gew.-% beträgt und wobei die Monomermischung, bezogen auf die Gesamtmenge von a), b), c) und d) weniger als 0,1 Gew.-% eines Monomeren mit wenigstens 2 radikalisch polymerisierbaren Doppelbindungen pro Molekül enthält.

Besonders bevorzugte erfindungsgemäße Polymere sind erhältlich durch Fällungspolymerisation einer Monomermischung, die umfasst
a) 30 bis 85 Gew.-% wenigstens eines nichtionischen wasserlöslichen Monomers,
b) wenigstens ein anionisches Monomer,
c) wenigstens eine radikalisch polymerisierbare Imidazol-Verbindung,
d) gegebenenfalls weitere Monomere d),
   wobei
   - die Gesamtmenge von a), b), c) und d) 100 Gew.-% beträgt und
   - die Monomermischung, bezogen auf die Gesamtmenge von a), b), c) und d), weniger als 0,1 Gew.-% eines Monomeren mit wenigstens 2 radikalisch polymerisierbaren Doppelbindungen pro Molekül enthält und
   - die Gesamtmenge von b) + c), bezogen auf die Gesamtmenge von a), b), c) und d), im Bereich von 15 bis 70 Gew.-% beträgt und
   - das Verhältnis der Molmengen von b) zu c) nicht im Bereich von 1:2 bis 2:1 liegt.

Im Rahmen der vorliegenden Erfindung umfasst der Ausdruck Alkyl geradkettige und verzweigte Alkylgruppen. Geeignete kurzkettige Alkylgruppen sind z. B. geradkettige oder verzweigte C₁-C₇-Alkyl-, bevorzugt C₁-C₆-Alkyl- und besonders bevorzugt C₁-C₄-Alkylgruppen. Dazu zählen insbesondere Methyl, Ethyl, Propyl, Isopropyl, n-Butyl, 2-Butyl, sec.-Butyl, tert.-Butyl, n-Pentyl, 1-Methylbutyl, 2-Methyl-butyl, 3-Methylbutyl, 1,2-Dimethylpropyl, 1,1-Dimethylpropyl, 2,2-Dimethylpropyl, Ethylpropyl, n-Hexyl, 1-Methylpentyl, 2-Methylpentyl, 3-Methylpentyl, 4-Methylpentyl, 1,2-Dimethylbutyl, 1,3-Dimethylbutyl, 2,3-Dimethylbutyl, 1,1-Dimethylbutyl, 2,2-Dimethylbutyl, 3,3-Dimethylbutyl, 1,1,2-Trimethylpropyl, 1,2,2-Trimethylpropyl, 1-Ethylbutyl, 2-Ethylbutyl, 1-Ethyl- 2-methylpropyl, n-Heptyl, 2-Heptyl, 3-Heptyl, 2-Ethylpentyl, 1-Propylbutyl, Octyl etc.

Geeignete längerkettige C₈-C₃₀-Alkyl- bzw. C₈-C₃₀-Alkenylgruppen sind geradkettige und verzweigte Alkyl- bzw. Alkenylgruppen. Bevorzugt handelt es sich dabei um überwiegend lineare Alkylreste, wie sie auch in natürlichen oder synthetischen Fettsäuren und Fettalkoholen sowie Oxoalkoholen vorkommen, die gegebenenfalls zusätzlich einfach, zweifach oder mehrfach ungesättigt sein können. Dazu zählen z. B. n-Hexyl(en), n-Heptyl(en), n-Octyl(en), n-Nonyl(en), n-Decyl(en), n-Undecyl(en), n-Dodecyl(en), n-Tridecyl(en), n-Tetradecyl(en), n-Pentadecyl(en), n-Hexadecyl(en), n-Heptadecyl(en), n-Octadecyl(en), n-Nonadecyl(en), Arachinyl(en), Behenyl(en), Lignocerinyl(en), Melissinyl(en), etc.

Cycloalkyl steht vorzugsweise für C₅-C₈-Cycloalkyl, wie Cyclopentyl, Cyclohexyl, Cycloheptyl oder Cyclooctyl.

Aryl umfasst unsubstituierte und substituierte Arylgruppen und steht vorzugsweise für Phenyl, Tolyl, Xylyl, Mesityl, Naphthyl, Fluorenyl, Anthracenyl, Phenanthrenyl, Naphthacenyl und insbesondere für Phenyl, Tolyl, Xylyl oder Mesityl.

Unter "anionisch" wird im Rahmen dieser Erfindung eine Verbindung verstanden, die entweder in anionischer Form vorliegt oder durch Deprotonierung in eine anionische Form überführt werden kann. Beispiele für anionische Verbindungen sind COOH-, COO⁻, oder SO₃H-Grupen enthaltende Verbindungen.

Unter "kationisch" wird im Rahmen dieser Erfindung eine Verbindung verstanden, die entweder in kationischer Form vorliegt oder durch durch Protonierung oder Quaternisierung, insbesondere Alkylierung in eine kationische Form überführt werden kann. Beispiele für kationische Verbindungen sind Aminogruppen enthaltende Verbindungen.

Die erfindungsgemäßen Polymere lassen sich unter Normalbedingungen (20°C, 1 bar) vorteilhaft als Gele formulieren. "Gelförmige Konsistenz" zeigen Formulierungen, die eine höhere Viskosität als eine Flüssigkeit aufweisen und die selbsttragend sind, d. h. die eine ihnen verliehene Form ohne formstabilisierende Umhüllung behalten. Im Gegensatz zu festen Formulierungen lassen sich gelförmige Formulierungen jedoch leicht unter Anwendung von Scherkräften deformieren. Die Viskosität der gelförmigen Mittel liegt vorzugsweise in einem Bereich von größer als 600 bis etwa 60000 mPas, besonders bevorzugt von 6000 bis 30000 mPas.

Unter wasserlöslichen Monomeren und Polymeren werden im Rahmen der vorliegenden Erfindung Monomere und Polymere verstanden, die sich bei 20 °C zu mindestens 1 g/l, bevorzugt zu mindestens 10 g/l für das menschliche Auge klar in Wasser lösen. Unter wasserdispergierbaren Monomeren und Polymeren werden Monomere und Polymere verstanden, die unter Anwendung von Scherkräften, beispielsweise durch Rühren, in dispergierbare Partikel zerfallen. Hydrophile Monomere sind vorzugsweise wasserlöslich oder zumindest wasserdispergierbar. Die erfindungsgemäß verwendeten Copolymere sind im Allgemeinen wasserlöslich.

"Modifizierung rheologischer Eigenschaften" ist im Rahmen der vorliegenden Erfindung weit zu verstehen. So eignen sich die erfindungsgemäßen Polymere im Allgemeinen zur Verdickung der Konsistenz von flüssigen Zusammensetzungen in einem weiten Bereich. Je nach Grundkonsistenz der flüssigen Zusammensetzungen können in Abhängigkeit von der Einsatzmenge des Polymers in der Regel Fließeigenschaften von dünnflüssig bis hin zu fest (nicht mehr fließend) erzielt werden. Unter "Modifizierung rheologischer Eigenschaften" wird daher u. a. die Erhöhung der Viskosität von Flüssigkeiten, die Verbesserung der Thixotropie-Eigenschaften von Gelen, die Verfestigung von Gelen und Wachsen verstanden.

Bevorzugte erfindungsgemäße Polymere weisen sowohl anionische als auch kationische Gruppen auf. Zu ihrer Herstellung können die entgegengesetzt geladenen/ladbaren Monomere b) und c) gemeinsam, d. h. in Form eines Monomerenpaares ("Monomerensalzes") eingesetzt werden. In dieser Monomerzusammensetzung beträgt das molare Verhältnis von anionischen Gruppen der Komponente b) zu kationischen Gruppen der Komponente c) etwa 1 : 1 (d. h. einwertige Monomere werden im Wesentlichen äquimolar eingesetzt). Die Monomerenpaare können dabei vor ihrem Einsatz zur Polymerisation separat hergestellt werden.

Nichtionisches wasserlösliches Monomer a)

Geeignete Monomere a) sind beispielsweise N-Vinyllactame und N-Vinyllactamderivate, die z. B. einen oder mehrere C₁-C₆-Alkylsubstituenten, wie Methyl, Ethyl, n-Propyl, Isopropyl, n-Butyl, sec.-Butyl, tert.-Butyl aufweisen können.
Dazu zählen z. B. N-Vinylpyrrolidon, N-Vinylpiperidon, N-Vinylcaprolactam, N-Vinyl-5-methyl-2-pyrrolidon, N-Vinyl-5-ethyl-2-pyrrolidon, N-Vinyl-6-methyl-2-piperidon, N-Vinyl-6-ethyl-2-piperidon, N-Vinyl-7-methyl-2-caprolactam, N-Vinyl-7-ethyl-2-caprolactam. Bevorzugte Monomere a) sind N-Vinylpyrrolidon und N-Vinylcaprolactam.

Weiter kann a) ausgewählt sein unter N-Vinylamiden gesättigter C₁-C₈-Monocarbonsäuren, primären Amiden α,β-ethylenisch ungesättigter Monocarbonsäuren und deren N-Alkyl- und N,N-Dialkylderivaten, die zusätzlich zu dem Carbonyl-Kohlenstoffatom der Amidgruppe höchstens 8 weitere Kohlenstoffatome aufweisen, Estern α,β -ethylenisch ungesättigter Mono- und Dicarbonsäuren mit Diolen, Amiden α,β-ethylenisch ungesättigter Mono- und Dicarbonsäuren mit Aminoalkoholen, die eine primäre oder sekundäre Aminogruppe aufweisen, Polyetheracrylaten und Mischungen davon.

Als Monomere a) geeignete N-Vinylamidverbindungen sind beispielsweise N-Vinylformamid, N-Vinyl-N-methylformamid, N-Vinylacetamid, N-Vinyl-N-methylacetamid, N-Vinyl-N-ethylacetamid, N-Vinylpropionamid, N-Vinyl-N-methylpropionamid und N-Vinylbutyramid.

Geeignete Monomere a) sind auch die im Folgenden unter Monomer b) genannten wenigstens eine Hydroxylgruppe tragenden Monomere, sofern sie wasserlöslich sind.

Bevorzugte Monomere a) sind N-Vinyllactame und deren Derivate, N-Vinylamide gesättigter C₁-C₈-Monocarbonsäuren und (Meth)acrylsäureamide.
Besonders bevorzugte Monomere a) sind N-Vinyllactame wie N-Vinylpyrrodidon (im Folgenden gelegentlich als "NVP" oder "VP" bezeichnet) und N-Vinylcaprolactam (im Folgenden gelegentlich als "VCap" bezeichnet).

in einer besonders bevorzugten Ausführungsform der Erfindung ist a) ausgewählt aus der Gruppe bestehend aus N-Vinylpyrrolidon, N-Vinylcaprolactam, (Meth)acrylamid und N-Vinylformamid.

Monomer b)

Monomer b) ist von Monomer a) verschieden und ist ausgewählt aus
i) anionischen Monomeren,
ii) Mischungen aus i) und wenigstens eine Hydroxylgruppe tragenden Monomeren.

Wenigstens eine Hydroxylgruppe tragende Monomere

Geeignete Monomere sind beispielsweise 2-Hydroxyethylacrylat,
2-Hydroxyethylmethacrylat, 2-Hydroxyethylethacrylat, 2-Hydroxypropylacrylat,
2-Hydroxypropylmethacrylat, 3-Hydroxypropylacrylat, 3-Hydroxypropylmethacrylat,
3-Hydroxybutylacrylat, 3-Hydroxybutylmethacrylat, 4-Hydroxybutylacrylat,
4-Hydroxybutylmethacrylat, 6-Hydroxyhexylacrylat, 6-Hydroxyhexylmethacrylat,
3-Hydroxy-2-ethylhexylacrylat und 3-Hydroxy-2-ethylhexylmethacrylat.

Geeignete weitere Monomere sind weiterhin 2-Hydroxyethylacrylamid,
2-Hydroxyethylmethacrylamid, 2-Hydroxyethylethacrylamid, 2-Hydroxypropylacrylamid,
2-Hydroxypropylmethacrylamid, 3-Hydroxypropylacrylamid,
3-Hydroxypropylmethacrylamid, 3-Hydroxybutylacrylamid,
3-Hydroxybutylmethacrylamid, 4-Hydroxybutylacrylamid,
4-Hydroxybutylmethacrylamid, 6-Hydroxyhexylacrylamid,
6-Hydroxyhexylmethacrylamid, 3-Hydroxy-2-ethylhexylacrylamid und
3-Hydroxy-2-ethylhexylmethacrylamid.

Anionische Monomere

Geeignete anionische Monomere b) i) sind bevorzugt ausgewählt unter monoethylenisch ungesättigten Carbonsäuren, Sulfonsäuren, Phosphonsäuren und Mischungen davon.

Zu b) i) zählen insbesondere monoethylenisch ungesättigte Mono- und Dicarbonsäuren mit 3 bis 25 vorzugsweise 3 bis 6 C-Atomen, die auch in Form ihrer Salze oder Anhydride eingesetzt werden können. Beispiele sind Acrylsäure, Methacrylsäure, Ethacrylsäure, α-Chloracrylsäure, Crotonsäure, Maleinsäure, Maleinsäureanhydrid, Itaconsäure, Citraconsäure, Mesaconsäure, Glutaconsäure, Aconitsäure und Fumarsäure. Zu den Monomeren b) i) zählen weiterhin die Halbester von monoethylenisch ungesättigten Dicarbonsäuren mit 4 bis 10 vorzugsweise 4 bis 6 C-Atomen, z. B. von Maleinsäure wie Maleinsäuremonomethylester. Zu den Monomeren b) i) zählen auch monoethylenisch ungesättigte Sulfonsäuren und Phosphonsäuren, beispielsweise Vinylsulfonsäure, Allylsulfonsäure, Sulfoethylacrylat, Sulfoethylmethacrylat, Sulfopropylacrylat, Sulfopropylmethacrylat, 2-Hydroxy-3-acryloxy-propylsulfonsäure, 2-Hydroxy-3-methacryloxypropylsulfonsäure, Styrolsulfonsäure, 2-Acrylamido-2-methylpropansulfonsäure, Vinylphosphonsäure und Allylphosphonsäure. Zu den Monomeren b) i) zählen auch die Salze der zuvor genannten Säuren, insbesondere die Natrium-, Kalium- und Ammoniumsalze sowie die Salze mit Aminen.
Die Monomere b) i) können als solche oder als Mischungen untereinander eingesetzt werden. Die angegebenen Gewichtsanteile beziehen sich sämtlich auf die Säureform.

Vorzugsweise ist b) i) ausgewählt unter Acrylsäure, Methacrylsäure, Ethacrylsäure, α-Chloracrylsäure, Crotonsäure, Maleinsäure, Maleinsäureanhydrid, Fumarsäure, Itaconsäure, Citraconsäure, Mesaconsäure, Glutaconsäure, Aconitsäure und Mischungen davon.

Besonders bevorzugt umfasst oder ist b) i) (Meth)acrylsäure.

Zur Herstellung der erfindungsgemäßen Polymere umfasst die Monomermischung vorzugsweise von 1 bis 50, bevorzugt von 3 bis 40 Gew.-% des anionischen Monomers b) i), bezogen auf das Gesamtgewicht aller Monomere a) bis d).

Monomer c)

Monomer c) ist ein wenigstens eine Aminogruppe tragendes Monomer und wird im Folgenden gelegentlich auch als kationisches Monomer bezeichnet.
Monomer c) umfasst in einer bevorzugten Ausführungsform wenigstens eine radikalisch polymerisierbare Imidazol-Verbindung und gegebenenfalls weitere kationische Monomere.

Bevorzugte radikalisch polymerisierbare Imidazol-Verbindungen sind Verbindungen der allgemeinen Formel (II) 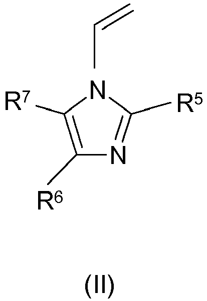 worin R⁵ bis R⁷ unabhängig voneinander für Wasserstoff, C₁-C₄-Alkyl oder Phenyl stehen.

Beispiele für Verbindungen der allgemeinen Formel (II) sind folgender Tabelle 1 zu entnehmen:

**Tabelle 1**

| R⁵ | R⁶ | R⁷ |
|---|---|---|
| H | H | H |
| Me | H | H |
| H | Me | H |
| H | H | Me |
| Me | Me | H |
| H | Me | Me |
| Me | H | Me |
| Ph | H | H |
| H | Ph | H |
| H | H | Ph |
| Ph | Me | H |
| Ph | H | Me |
| Me | Ph | H |
| H | Ph | Me |
| H | Me | Ph |
| Me | H | Ph |

| | | |
|---|---|---|
| Me = Methyl Ph = Phenyl | | |

Geeignete radikalisch polymerisierbare Imidazol-Verbindungen sind beispielsweise auch Verbindungen der Formel 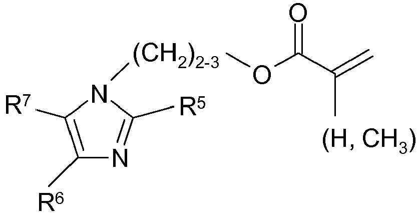 worin R⁵ bis R⁷ unabhängig voneinander für Wasserstoff, C₁-C₄-Alkyl oder Phenyl stehen. Bevorzugt stehen R⁵ bis R⁷ für Wasserstoff.

Geeignete radikalisch polymerisierbare Imidazol-Verbindungen sind auch die durch Protonierung oder Quaternisierung der zuvor genannten Verbindungen erhältlichen Verbindungen. Beispiele für solche geladenen Monomere c) sind quaternisierte Vinylimidazole, insbesondere 3-Methyl-1-vinylimidazoliumchlorid und -methosulfat. Für die Protonierung oder Quaternisierung geeignete Säuren bzw. Alkylierungsmittel sind im Folgenden aufgeführt.

Die bevorzugte radikalisch polymerisierbare Imidazol-Verbindung ist oder umfasst N-Vinylimidazol.

Weitere kationische Monomere
Bei den Aminogruppen der kationischen Monomere c) handelt es sich um primäre, sekundäre und/oder tertiäre Aminogruppen sowie quaternäre Ammoniumgruppen. Vorzugsweise handelt es sich bei den Aminogruppen um tertiäre Aminogruppen oder quaternäre Ammoniumgruppen. Geladene kationische Gruppen lassen sich aus neutralen Aminogruppen durch Protonierung oder durch Quaternisierung, z.B. mit Säuren und/oder Alkylierungsmitteln erzeugen. Geeignete Säuren sind z.B. Carbonsäuren wie Milchsäure oder Mineralsäuren wie Phosphorsäure, Schwefelsäure und Salzsäure. Geeignete Alkylierungsmittel sind beispielsweise C₁-C₄-Alkylhalogenide oder -sulfate, wie Ethylchlorid, Ethylbromid, Methylchlorid, Methylbromid, Dimethylsulfat und Diethylsulfat. Eine Protonierung oder Quaternisierung kann im Allgemeinen sowohl vor als auch nach der Polymerisation erfolgen.

Geeignete Monomere c) sind weiterhin die Ester von α,β-ethylenisch ungesättigten Mono- und Dicarbonsäuren mit Aminoalkoholen. Bevorzugte Aminoalkohole sind C₂-C₁₂-Aminoalkohole, welche am Aminstickstoff C₁-C₈-dialkyliert sind. Als Säurekomponente dieser Ester eignen sich z. B. Acrylsäure, Methacrylsäure, Fumarsäure, Maleinsäure, Itaconsäure, Crotonsäure, Maleinsäureanhydrid, Monobutylmaleat und Gemische davon. Bevorzugt werden als Säurekomponente Acrylsäure, Methacrylsäure und deren Gemische eingesetzt.

Bevorzugte Monomere c) sind N,N-Dimethylaminomethyl(meth)acrylat,
N,N-Dimethylaminoethyl(meth)acrylat, N,N-Diethylaminoethyl(meth)acrylat,
N,N-Dimethylaminopropyl(meth)acrylat, N,N-Diethylaminopropyl(meth)acrylat und
N,N-Dimethylaminocyclohexyl(meth)acrylat.

Geeignete Monomere c) sind weiterhin die Amide der zuvor genannten α,β - ethylenisch ungesättigten Mono- und Dicarbonsäuren mit Diaminen, welche mindestens eine primäre oder sekundäre Aminogruppe aufweisen. Bevorzugt sind Diamine, die eine tertiäre und eine primäre oder sekundäre Aminogruppe aufweisen.

Geeignete Monomere c) sind z.B. N-[2-(dimethylamino)ethyl]acrylamid,
N-[2-(dimethylamino)ethyl]methacrylamid, N-[3-(dimethylamino)propyl]acrylamid,
N-[3-(dimethylamino)propyl]methacrylamid, N-[4-(dimethylamino)butyl]acrylamid,
N-[4-(dimethylamino)- butyl]methacrylamid, N-[2-(diethylamino)ethyl]acrylamid,
N-[4-(dimethylamino)cyclohexyl]acrylamid und
N-[4-(dimethylamino)cyclohexyl]methacrylamid.

Geeignete Monomere c) sind weiterhin N,N-Diallylamine und N,N-Diallyl-N-alkylamine und deren Säureadditionssalze und Quaternisierungsprodukte. Alkyl steht dabei vorzugsweise für C₁-C₂₄-Alkyl. Bevorzugt sind N,N-Diallyl-N-methylamin und N,N-Diallyl-N,N-dimethylammonium-Verbindungen, wie z. B. die Chloride und Bromide. Dazu zählt insbesondere N,N-Diallyl-N,N-dimethylammonium-chlorid (DADMAC).

Geeignete Monomere c) sind weiterhin verschiedene vinyl- und allylsubstituierte Stickstoffheterocyclen, wie 2- und 4-Vinylpyridin, 2- und 4-Allylpyridin, und die Salze davon.

Die zuvor genannten Monomere c) können jeweils einzeln oder in Form von beliebigen Mischungen eingesetzt werden.

Zur Herstellung der erfindungsgemäßen Polymere umfasst die Monomermischung vorzugsweise von 1 bis 50, bevorzugt von 3 bis 40 Gew.-% des kationischen Monomers c), bezogen auf das Gesamtgewicht aller Monomere a) bis d).

In einer besonders bevorzugten Ausführungsform der Erfindung umfasst Monomer c) eine radikalisch polymerisierbare Imidazolverbindung und gegebenenfalls weitere kationische Monomere.

In einer bevorzugten Ausführungsform der Erfindung umfasst Monomer c) eine radikalisch polymerisierbare Imidazolverbindung und einen N,N-Dialkylamino(meth)acrylsäurealkylester wie beispielsweise N,N-Dimethylaminoethyl(meth)acrylat.

In einer bevorzugten Ausführungsform der Erfindung umfasst Monomer c) eine radikalisch polymerisierbare Imidazolverbindung und ein N,N-Dialkylamino(meth)acrylsäurealkylamid wie beispielsweise N-[3-(dimethylamino)propyl]acrylamid.

Erfindungsgemäß bevorzugt beträgt die Gesamtmenge von b) + c) im Bereich von 10 bis 70, besonders bevorzugt im Bereich von 20 bis 50 Gew.-%, bezogen auf das Gesamtgewicht aller Monomere a) bis d).

Monomere d)
Die gegebenenfalls in der Monomermischung enthaltenen Monomere d) sind vorzugsweise ausgewählt unter
Polyether(meth)acrylaten, Polyester(meth)acrylaten,
Estern α,β-ethylenisch ungesättigter Mono- und Dicarbonsäuren mit C₁-C₃₀-Alkanolen, N-Alkyl- und N,N-Dialkylamiden α,β -ethylenisch ungesättigter Monocarbonsäuren, die zusätzlich zu dem Carbonyl-Kohlenstoffatom der Amidgruppe mindestens 9 weitere Kohlenstoffatome aufweisen,
Estern von Vinylalkohol und Allylalkohol mit C₁-C₃₀-Monocarbonsäuren,
Vinylethern,
Vinylaromaten,
Vinylhalogeniden,
Vinylidenhalogeniden,
C₁-C₈-Monoolefinen,
nicht aromatischen Kohlenwasserstoffen mit mindestens zwei konjugierten Doppelbindungen und
Mischungen davon.

Geeignete zusätzliche Monomere d) sind weiterhin Methyl(meth)acrylat, Methylethacrylat, Ethyl(meth)acrylat, Ethylethacrylat, n-Butyl(meth)acrylat, tert.-Butyl(meth)acrylat, tert.-Butylethacrylat, n-Octyl(meth)acrylat, 1,1,3,3-Tetramethylbutyl(meth)acrylat, Ethylhexyl(meth)acrylat, n-Nonyl(meth)acrylat, n-Decyl(meth)acrylat, n-Undecyl(meth)acrylat, Tridecyl(meth)acrylat, Myristyl(meth)acrylat, Pentadecyl(meth)acrylat, Palmityl(meth)acrylat, Heptadecyl(meth)acrylat, Nonadecyl(meth)acrylat, Arrachinyl(meth)acrylat, Behenyl(meth)acrylat, Lignocerenyl(meth)acrylat, Cerotinyl(meth)acrylat, Melissinyl(meth)acrylat, Palmitoleinyl(meth)acrylat, Oleyl(meth)acrylat, Linolyl(meth)acrylat, Linolenyl(meth)acrylat, Stearyl(meth)acrylat, Lauryl(meth)acrylat und Mischungen davon.

Geeignete zusätzliche Monomere d) sind weiterhin N-(n-Octyl)(meth)acrylamid, N-(1,1,3,3-Tetramethylbutyl)(meth)acrylamid, N-Ethylhexyl(meth)acrylamid,
N-(n-Nonyl)(meth)acrylamid, N-(n-Decyl)(meth)acrylamid,
N-(n-Undecyl)(meth)acrylamid, N-Tridecyl(meth)acrylamid, N-Myristyl(meth)acrylamid,
N-Pentadecyl(meth)acrylamid, N-Palmityl(meth)acrylamid,
N-Heptadecyl(meth)acrylamid, N-Nonadecyl(meth)acrylamid,
N-Arrachinyl(meth)acrylamid, N-Behenyl(meth)acrylamid,
N-Lignocerenyl(meth)acrylamid, N-Cerotinyl(meth)acrylamid,
N-Melissinyl(meth)acrylamid, N-Palmitoleinyl(meth)acrylamid,
N-Oleyl(meth)acrylamid, N-Linolyl(meth)acrylamid, N-Linolenyl(meth)acrylamid,
N-Stearyl(meth)acrylamid, N-Lauryl(meth)acrylamid.

Geeignete zusätzliche Monomere d) sind weiterhin Vinylacetat, Vinylpropionat, Vinylbutyrat und Mischungen davon.

Geeignete zusätzliche Monomere d) sind weiterhin Ethylen, Propylen, Isobutylen, Butadien, Styrol, α-Methylstyrol, Acrylnitril, Methacrylnitril, Vinylchlorid, Vinylidenchlorid, Vinylfluorid, Vinylidenfluorid und Mischungen davon.

Besonders bevorzugt als Monomer d) sind Polyether(meth)acrylate, worunter im Rahmen dieser Erfindung allgemein Ester a,ß-ethylenisch ungesättigter Mono- und Dicarbonsäuren mit Polyetherolen verstanden werden.
Geeignete Polyetherole sind lineare oder verzweigte, endständige Hydroxylgruppen aufweisende Substanzen, die Etherbindungen enthalten. Im Allgemeinen weisen sie ein Molekulargewicht im Bereich von etwa 150 bis 20000 auf. Geeignete Polyetherole sind Polyalkylenglykole, wie Polyethylenglykole, Polypropylenglykole, Polytetrahydrofurane und Alkylenoxidcopolymere. Geeignete Alkylenoxide zur Herstellung von Alkylenoxidcopolymeren sind z. B. Ethylenoxid, Propylenoxid, Epichlorhydrin, 1,2- und 2,3-Butylenoxid. Die Alkylenoxidcopolymere können die Alkylenoxideinheiten statistisch verteilt oder in Form von Blöcken einpolymerisiert enthalten. Bevorzugt sind Ethylenoxid/Propylenoxid-Copolymere. Bevorzugt als Komponente d) sind Polyether(meth)acrylate der allgemeinen Formel 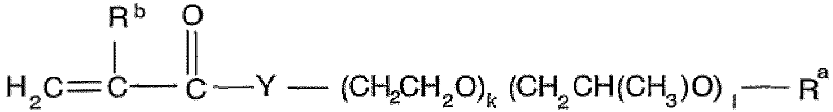 worin die Reihenfolge der Alkylenoxideinheiten beliebig ist,
k und I unabhängig voneinander für eine ganze Zahl von 0 bis 1000 stehen,
wobei die Summe aus k und I mindestens 5 beträgt,
Ra für Wasserstoff, C1-C30-Alkyl oder C5-C8-Cycloalkyl steht,
R^{b} für Wasserstoff oder C1-C8-Alkyl steht,
Y für 0 oder NR^{b} steht, wobei R^{b} für Wasserstoff, C1-C30-Alkyl oder C5-C8-Cycloalkyl steht,

Bevorzugt steht k für eine ganze Zahl von 1 bis 500, insbesondere 3 bis 250. Bevorzugt steht I für eine ganze Zahl von 0 bis 100.
Bevorzugt steht R^{b} für Wasserstoff, Methyl, Ethyl, n-Propyl, Isopropyl, n-Butyl, sec.-Butyl, tert.-Butyl, n-Pentyl oder n-Hexyl, insbesondere für Wasserstoff, Methyl oder Ethyl.
Vorzugsweise steht R^{a} für C8-C30-Alkyl, insbesondere für C12-C30-Alkyl, wie Decyl, Undecyl, Tridecyl, Myristyl, Pentadecyl, Palmityl, Lauryl, Stearyl, etc.
Vorzugsweise steht Y für 0 oder NH.

Geeignete Polyether(meth)acrylate sind z. B. die Polykondensationsprodukte der zuvor genannten α,ß-ethylenisch ungesättigten Mono- und/oder Dicarbonsäuren und deren Säurechloriden, -amiden und Anhydriden mit Polyetherolen. Geeignete Polyetherole können leicht durch Umsetzung von Ethylenoxid, 1,2-Propylenoxid und/oder Epichlorhydrin mit einem Startermolekül, wie Wasser oder einem kurzkettigen Alkohol R^{a}-OH hergestellt werden. Die Alkylenoxide können einzeln, alternierend nacheinander oder als Mischung eingesetzt werden. Geeignete Polyetheracrylate lassen sich auch durch Umesterung der Ester α,ß-ethylenisch ungesättigter Mono- und Dicarbonsäuren mit Polyetherolen herstellen. Dabei resultieren in der Regel Produktgemische, die sowohl die als Edukte eingesetzten Ester als auch die durch Umesterung gebildeten Polyether(meth)acrylate enthalten. Diese Gemische können im Allgemeinen ohne vorherige Auftrennung zur Herstellung der erfindungsgemäßen Polymere eingesetzt werden. Die Polyether(meth)acrylate können allein oder in Mischungen zur Herstellung der erfindungsgemäßen Polymere verwendet werden.

Vorzugsweise beträgt der Anteil an Monomeren d) 0 bis 15 Gew.-%, besonders bevorzugt 0,1 bis 10 Gew.-%, bezogen auf das Gesamtgewicht der zur Polymerisation eingesetzten Monomere a) bis d).

Die erfindungsgemäßen Polymere sind bevorzugt im Wesentlichen linear, also weder verzweigt noch vernetzt. Demzufolge enthalten die erfindungsgemäßen Polymere weniger als 0,1, bevorzugt weniger als 0,05, weiter bevorzugt weniger als 0,01, weiter bevorzugt weniger als 0,001 und insbesondere weniger als 0,0001 Gew.-% eines Monomeren mit wenigstens 2 radikalisch polymerisierbaren Doppelbindungen pro Molekül einpolymerisiert. Am meisten bevorzugt enthalten die erfindungsgemäßen Polymere keine solchen Monomere einpolymerisiert.

Die Herstellung der erfindungsgemäßen Polymere erfolgt nach der Methode der Fällungspolymerisation.
Ein weiterer Gegenstand der Erfindung ist also ein Verfahren zur Herstellung der erfindungsgemäßen Polymere, dadurch gekennzeichnet, dass es sich bei der Polymerisation um eine Fällungspolymerisation handelt.

In einer speziellen Ausführungsform der Erfindung werden zur Herstellung der erfindungsgemäßen Polymere wenigstens zwei Radikalinitiatoren eingesetzt, deren Zerfallstemperaturen und/oder deren Halbwertszeiten bei einer bestimmten Polymerisationstemperatur voneinander verschieden sind. Dabei können Copolymere mit besonders geringen Restmonomergehalten erzielt werden. Dies ist insbesondere der Fall, wenn der bei höherer Temperatur zerfallende Initiator vor Abschluss der Fällung des Polymers, vorzugsweise vor Beginn der Fällung des Polymers, zugegeben wird.

Bei der Fällungspolymerisation sind die eingesetzten Monomere im Reaktionsmedium, das die Monomere und das Lösungsmittel umfasst, löslich, nicht aber das entstehende Polymer. Das entstehende Polymer wird unter den gewählten Polymerisationsbedingungen unlöslich und fällt aus. Dabei lassen sich Copolymere mit höheren Molekulargewichten erhalten als nach anderen Polymerisationsverfahren, z. B. durch Lösungspolymerisation. Solche Copolymere mit höheren Molekulargewichten eignen sich besonders vorteilhaft als Rheologiemodifizierer, insbesondere als Verdicker.

Die Fällungspolymerisation erfolgt bevorzugt in einem Lösungsmittel, in dem jedes der eingesetzten Monomere bei 20°C und 1 bar in einer Menge von wenigstens 10 Gew.-% für das menschliche Auge klar löslich ist.
Die Fällungspolymerisation erfolgt beispielsweise in einem Ester wie Essigsäureethylester oder Essigsäurebutylester und/oder einem Kohlenwasserstoff wie Cyclohexan oder n-Heptan als Lösungsmittel. Die resultierenden Polymerteilchen fallen aus der Reaktionslösung aus und können durch übliche Verfahren, wie Filtration mittels Unterdruck, isoliert werden.

Die Polymerisationstemperaturen liegen vorzugsweise in einem Bereich von etwa 30 bis 120 °C, besonders bevorzugt 40 bis 100 °C. Die Polymerisation erfolgt üblicherweise unter atmosphärischem Druck, sie kann jedoch auch unter vermindertem oder erhöhtem Druck ablaufen. Ein geeigneter Druckbereich liegt zwischen 1 und 5 bar.

Als Initiatoren für die radikalische Polymerisation können die hierfür üblichen Peroxo- und/oder Azo-Verbindungen eingesetzt werden, beispielsweise Alkali- oder Ammoniumperoxidisulfate, Diacetylperoxid, Dibenzoylperoxid, Succinylperoxid, Di-tert.-butylperoxid, tert.-Butylperbenzoat, tert.-Butylperpivalat, tert.-Butylperoxy-2-ethylhexanoat, tert.-Butylpermaleinat, Cumolhydroperoxid, Diisopropylperoxidicarbamat, Bis-(o-toluoyl)-peroxid, Didecanoylperoxid, Dioctanoylperoxid, Dilauroylperoxid, tert.-Butylperisobutyrat, tert.-Butylperacetat, Di-tert.-Amylperoxid, tert.-Butylhydroperoxid, Azo-bis-isobutyronitril, Azo-bis-(2-amidinopropan)dihydrochlorid oder 2-2'-Azo-bis-(2-methyl-butyronitril). Geeignet sind auch Initiatormischungen oder Redox-Initiator-Systeme, wie z.B. Ascorbinsäure/Eisen(II)sulfat/Natriumperoxodisulfat, tert.-Butylhydroperoxid/Natriumdisulfit, tert.-Butylhydroperoxid/ Natriumhydroxymethansulfinat, H2O2/Cu(I).

Zur Einstellung des Molekulargewichts kann die Polymerisation in Gegenwart wenigstens eines Reglers erfolgen. Als Regler können die üblichen, dem Fachmann bekannten Verbindungen, wie z.B. Schwefelverbindungen, z.B. Mercaptoethanol, 2-Ethylhexylthioglycolat, Thioglycolsäure oder Dodecylmercaptan sowie Tribromchlormethan oder andere Verbindungen, die regelnd auf das Molekulargewicht der erhaltenen Polymerisate wirken, eingesetzt werden. Ein bevorzugter Regler ist Cystein.

Zur Erzielung möglichst reiner Polymere mit geringem Restmonomergehalt kann sich an die Polymerisation (Hauptpolymerisation) ein Nachpolymerisationsschritt anschließen. Die Nachpolymerisation kann in Gegenwart desselben oder eines anderen Initiatorsystems wie die Hauptpolymerisation erfolgen. Vorzugsweise erfolgt die Nachpolymerisation mindestens bei der gleichen, vorzugsweise bei einer höheren Temperatur als die Hauptpolymerisation. Die Temperatur bei der Haupt- und der Nachpolymerisation beträgt vorzugsweise höchstens 100°C (Hauptreaktion) und 130°C (Nachpolymerisation).

Das ausgefallene Polymer wird nach dem Nachpolymerisationsschritt aus der Reaktionsmischung isoliert, wofür jede übliche Methode zur Isolierung der Polymere in der konventionellen Fällungspolymerisation verwendet werden kann. Solche Methoden sind Filtration, Zentrifugation, Eindampfen des Lösungsmittels oder Kombinationen dieser Methoden. Zur weiteren Reinigung des Polymers von nichtpolymerisierten Bestandteilen kann das Polymer gewaschen werden. Dafür kann man prinzipiell die gleichen Lösungsmittel verwenden wie sie für die Polymerisation geeignet sind.

Die vorzugsweise erhaltenen Polymer-Trockenpulver lassen sich vorteilhafterweise durch Lösen bzw. Redispergieren in Wasser in eine wässrige Lösung bzw. Dispersion überführen. Pulverförmige Copolymere haben den Vorteil einer besseren Lagerfähigkeit und einer einfacheren Transportmöglichkeit und zeigen in der Regel eine geringere Neigung für Keimbefall.

Die Säuregruppen der Polymere können mit einer Base teilweise oder vollständig neutralisiert werden. Als Base für die Neutralisation der Polymere können Alkalimetallbasen wie Natronlauge, Kalilauge, Soda, Natriumhydrogencarbonat, Kaliumcarbonat oder Kaliumhydrogencarbonat und Erdalkalimetallbasen wie Calciumhydroxyd, Calciumoxid, Magnesiumhydroxyd oder Magnesiumcarbonat sowie Amine verwendet werden. Geeignete Amine sind z. B. C1-C6-Alkylamine, bevorzugt n-Propylamin und n-Butylamin, Dialkylamine, bevorzugt Diethylpropylamin und Dipropylmethylamin, Trialkylamine, bevorzugt Triethylamin und Triisopropylamin. Bevorzugt sind Aminoalkohole, z.B. Trialkanolamine, wie Triethanolamin, Alkyldialkanolamine, wie Methyl- oder Ethyldiethanolamin und Dialkylalkanolamine, wie Dimethylethanolamin sowie 2-Amino-2-methyl-1-propanol. Besonders für den Einsatz in Haarbehandlungsmitteln haben sich zur Neutralisation der Säuregruppen enthaltenden Polymere 2-Amino-2-methyl-1-propanol, 2-Amino-2-ethylpropan-1,3-diol, Diethylaminopropylamin und Triisopropanolamin bewährt. Die Neutralisation der Säuregruppen kann auch mit Hilfe von Mischungen mehrerer Basen vorgenommen werden, z. B. Mischungen aus Natronlauge und Triisopropanolamin. Die Neutralisation kann je nach Anwendungszweck partiell oder vollständig erfolgen.

Geladene kationische Gruppen lassen sich beispielsweise aus den Aminogruppen entweder durch Protonierung, z. B. mit ein- oder mehrwertigen Carbonsäuren, wie Milchsäure oder Weinsäure, oder mit Mineralsäuren, wie Phosphorsäure, Schwefelsäure und Salzsäure, oder durch Quaternisierung, z. B. mit Alkylierungsmitteln, wie C1- bis C4-Alkylhalogeniden oder -sulfaten, erzeugen. Beispiele solcher Alkylierungsmittel sind Ethylchlorid, Ethylbromid, Methylchlorid, Methylbromid, Dimethylsulfat und Diethylsulfat.

Die erfindungsgemäßen Polymere können, insbesondere als Verdickungsmittel, in wässrigen Zubereitungen in den Bereichen Haushalt, Personal Care, Bauindustrie, Textil, für Papierstreichmassen, Pigmentdruckpasten, wässrige Farben, Lederbehandlungsmittel, Kosmetikformulierungen, pharmazeutische Erzeugnisse und Agrochemikalien verwendet werden.

Ein weiterer Gegenstand der Erfindung sind daher kosmetische und/oder pharmazeutische Zubereitungen, die die erfindungsgemäßen Polymere enthalten.

Ein weiterer Gegenstand der Erfindung sind kosmetische oder pharmazeutische Zubereitungen, enthaltend
A) wenigstens ein erfindungsgemäßes Polymer und
B) wenigstens einen kosmetisch akzeptablen Träger.

Die erfindungsgemäßen Zubereitungen weisen vorzugsweise einen kosmetisch oder pharmazeutisch akzeptablen Träger B) auf, der ausgewählt ist unter
i) Wasser,
ii) wassermischbaren organischen Lösungsmitteln, vorzugsweise C₂-C₄-Alkanolen, insbesondere Ethanol,
iii) Ölen, Fetten, Wachsen,
iv) von iii) verschiedenen Estern von C₆-C₃₀-Monocarbonsäuren mit ein-, zwei- oder dreiwertigen Alkoholen,
v) gesättigten acyclischen und cyclischen Kohlenwasserstoffen,
vi) Fettsäuren,
vii) Fettalkoholen,
viii) Treibgasen,
und Mischungen davon.

Die erfindungsgemäßen Zubereitungen weisen z. B. eine Öl- bzw. Fettkomponente B) auf, die ausgewählt ist unter: Kohlenwasserstoffen geringer Polarität, wie Mineralölen; linearen gesättigten Kohlenwasserstoffen, vorzugsweise mit mehr als 8 C-Atomen, wie Tetradecan, Hexadecan, Octadecan etc.; cyclischen Kohlenwasserstoffen, wie Decahydronaphthalin; verzweigten Kohlenwasserstoffen; tierischen und pflanzlichen Ölen; Wachsen; Wachsestern; Vaselin; Estern, bevorzugt Estern von Fettsäuren, wie z. B. die Ester von C₁-C₂₄-Monoalkoholen mit C₁-C₂₂-Monocarbonsäuren, wie Isopropylisostearat, n-Propylmyristat, iso-Propylmyristat, n-Propylpalmitat, iso-Propylpalmitat, Hexacosanylpalmitat, Octacosanylpalmitat, Triacontanylpalmitat, Dotriacontanylpalmitat, Tetratriacontanylpalmitat, Hexacosanylstearat, Octacosanylstearat, Triacontanylstearat, Dotriacontanylstearat, Tetratriacontanylstearat; Salicylaten, wie C₁-C₁₀-Salicylaten, z. B. Octylsalicylat; Benzoatestern, wie C₁₀-C₁₅-Alkylbenzoaten, Benzylbenzoat; anderen kosmetischen Estern, wie Fettsäuretriglyceriden, Propylenglykolmonolaurat, Polyethylenglykolmonolaurat, C₁₀-C₁₅-Alkyllactaten, etc. und Mischungen davon.

Die Ölkomponente B) kann auch aus Siliconölen ausgewählt sein wie z. B. lineare Polydimethylsiloxanen, Poly(methylphenyl)siloxanen, cyclischen Siloxanen und Mischungen davon. Das zahlenmittlere Molekulargewicht der Polydimethylsiloxane und Poly(methylphenyl)siloxane liegt vorzugsweise in einem Bereich von etwa 1000 bis 150000 g/mol. Bevorzugte cyclische Siloxane weisen 4- bis 8-gliedrige Ringe auf. Geeignete cyclische Siloxane sind z. B. unter der Bezeichnung Cyclomethicon kommerziell erhältlich.

Bevorzugte Öl- bzw. Fettkomponenten B) sind ausgewählt unter Paraffin und Paraffinölen; Vaselin; natürlichen Fetten und Ölen, wie Castoröl, Sojaöl, Erdnussöl, Olivenöl, Sonnenblumenöl, Sesamöl, Avocadoöl, Kakaobutter, Mandelöl, Pfirsichkernöl, Ricinusöl, Lebertran, Schweineschmalz, Walrat, Spermacetöl, Spermöl, Weizenkeimöl, Macadamianussöl, Nachtkerzenöl, Jojobaöl; Fettalkoholen, wie Laurylalkohol, Myristylalkohol, Cetylalkohol, Stearylalkohol, Oleylalkohol, Cetylalkohol; Fettsäuren, wie Myristinsäure, Stearinsäure, Palmitinsäure, Ölsäure, Linolsäure, Linolensäure und davon verschiedenen gesättigten, ungesättigten und substituierten Fettsäuren; Wachsen, wie Bienenwachs, Carnaubawachs, Candilillawachs, sowie Mischungen der zuvor genannten Öl- bzw. Fettkomponenten.
Geeignete kosmetisch und pharmazeutisch verträgliche Öl- bzw. Fettkomponenten B) sind auch in Karl-Heinz Schrader, Grundlagen und Rezepturen der Kosmetika, 2. Auflage, Verlag Hüthig, Heidelberg, S. 319 - 355 beschrieben, worauf hier Bezug genommen wird.
Vorteilhafterweise werden diejenigen Öle, Fette und/oder Wachse gewählt, die auf Seite 28, Zeile 39 bis Seite 34, Zeile 22 der WO 2006/106140 beschrieben sind. Auf den Inhalt der genannten Textstelle wird hiermit in vollem Umfang Bezug genommen.
Der Gehalt an weiteren Ölen, Fetten und Wachsen beträgt höchstens 50, bevorzugt 30, weiter bevorzugt höchstens 20 Gewichts-%, bezogen auf das Gesamtgewicht der Zusammensetzung.

Geeignete hydrophile Träger B) sind beispielsweise ausgewählt unter Wasser, ein-, zwei- oder mehrwertigen Alkoholen mit vorzugsweise 1 bis 8 Kohlenstoffatomen, wie Ethanol, n-Propanol, iso-Propanol, Propylenglycol, Glycerin, Sorbit.

Bei den erfindungsgemäßen kosmetischen Zubereitungen kann es sich um hautkosmetische, haarkosmetische, dermatologische, hygienische oder pharmazeutische Zubereitungen handeln. Aufgrund ihrer Eigenschaften eignen sich die erfindungsgemäßen Polymere insbesondere als Verdickungsmittel für Haar- und Hautkosmetika.

Vorzugsweise liegen die erfindungsgemäßen Zubereitungen in Form eines Gels, Schaums, Sprays, einer Salbe, Creme, Emulsion, Suspension, Lotion, Milch oder Paste vor. Gewünschtenfalls können auch Liposomen oder Mikrosphären eingesetzt werden.

Die erfindungsgemäßen kosmetisch oder pharmazeutisch aktiven Zubereitungen können zusätzlich kosmetisch und/oder dermatologisch aktive Wirkstoffe sowie Hilfsstoffe enthalten.

Vorzugsweise enthalten die erfindungsgemäßen kosmetischen Zubereitungen wenigstens ein erfindungsgemäßes Polymer A), wenigstens einen wie vorstehend definierten Träger B) und wenigstens einen davon verschiedenen Bestandteil, der ausgewählt ist unter kosmetisch aktiven Wirkstoffen, Emulgatoren, Tensiden, Konservierungsmitteln, Parfümölen, weiteren Verdickern, Haarpolymeren, Haar- und Hautconditionern, Pfropfpolymeren, wasserlöslichen oder dispergierbaren silikonhaltigen Polymeren, Lichtschutzmitteln, Bleichmitteln, Gelbildnern, Pflegemitteln, Färbemitteln, Tönungsmitteln, Bräunungsmitteln, Farbstoffen, Pigmenten, Konsistenzgebern, Feuchthaltemitteln, Rückfettern, Collagen, Eiweisshydrolysaten, Lipiden, Antioxidantien, Entschäumern, Antistatika, Emollienzien und Weichmachern.

Die erfindungsgemäßen kosmetischen Zubereitungen können als wässrige oder wässrig-alkoholische Lösungen, O/W- sowie W/O-Emulsionen, Hydrodispersionsformulierungen, feststoffstablilisierte Formulierungen, Stiftformulierungen, PIT-Formulierungen, in Form von Cremes, Schäumen, Sprays (Pumpspray oder Aerosol), Gelen, Gelsprays, Lotionen, Ölen, Ölgelen oder Mousse vorliegen und dementsprechend mit üblichen weiteren Hilfsstoffen formuliert werden.

Besonders bevorzugte kosmetische Zubereitungen im Sinne der vorliegenden Erfindung sind Gele, Shampoos, Wasch- und Badepräparate sowie Haarpflegemittel. Die Erfindung betrifft demnach auch Zubereitungen zur Reinigung und/oder Pflege der Haare und der Haut.

Insbesondere betrifft die Erfindung Haarpflegemittel ausgewählt aus der Gruppe bestehend aus Stylinggelen, Frisiergelen, Shampoos, Haarconditionern, Haarbalsamen, Pomaden, Frisiercremes, Frisierlotionen, Frisiergelen, Spitzenfluids, Hot-Oil-Treatments.

Weiterhin betrifft die Erfindung kosmetische Zubereitungen, die ausgewählt sind aus Gelen, Gelcremes, Hydroformulierungen, Stiftformulierungen, kosmetischen Ölen und Ölgelen, Mascara, Selbstbräunern, Gesichtspflegemitteln, Körperpflegemitteln, After-Sun-Präparaten.

Weitere erfindungsgemäße kosmetische Zubereitungen sind hautkosmetische Zubereitungen, insbesondere solche zur Pflege der Haut. Diese liegen insbesondere als W/O- oder O/W-Hautcremes, Tag- und Nachtcremes, Augencremes, Gesichtscremes, Antifa-Itencremes, Mimikcremes, Feuchthaltecremes, Bleichcremes, Vitamincremes, Hautlotionen, Pflegelotionen und Feuchthaltelotionen vor.
Weiterhin eignen sich die erfindungsgemäßen Polymere als Verdicker für hautkosmetische Zubereitungen Gesichtsmasken, kosmetische Lotionen und für die Verwendung in der dekorativen Kosmetik, beispielsweise für Abdeckstiftw, Theaterfarben, in Mascara und Lidschatten, Lippenstiften, Kajalstiften, Eyelinern, Makeup, Grundierungen, Rouges und Pudern und Augenbrauenstiften.

Außerdem können die erfindungsgemäßen Zubereitungen verwendet werden in Antiaknemitteln, Repellentien, Rasiermitteln, Haarentfernungsmitteln, Intimpflegemitteln, Fußpflegemitteln sowie in der Babypflege.

Weitere bevorzugte erfindungsgemäße Zubereitungen sind Wasch-, Dusch- und Badepräparate, die die erfindungsgemäßen Polymere enthalten.
Unter Wasch-, Dusch- und Badepräparaten werden im Rahmen dieser Erfindung Seifen von flüssiger bis gelförmiger Konsistenz, wie Transparentseifen, Luxusseifen, Deoseifen, Cremeseifen, Babyseifen, Hautschutzseifen, Abrasivseifen und Syndets, pasteuse Seifen, Schmierseifen und Waschpasten, flüssige Wasch-, Dusch- und Badepräparate, wie Waschlotionen, Duschbäder und -gele, Schaumbäder, Ölbäder und Scrub-Präparate, Rasierschäume, -lotionen und -cremes verstanden.
Geeignete weitere Inhaltsstoffe für diese erfindungsgemäßen Wasch-, Dusch- und Badepräparate sind im Folgenden beschrieben.

Die erfindungsgemäßen Zubereitungen enthalten bevorzugt neben den erfindungsgemäßen Polymeren A) und dem Träger B) weitere kosmetisch akzeptable Zusätze wie beispielsweise Emulgatoren und Co-Emulgatoren, Lösungsmittel, Tenside, Ölkörper, Konservierungsmittel, Parfümöle, kosmetische Pflege- und Wirkstoffe wie AHA-Säuren, Fruchtsäuren, Ceramide, Phytantriol, Collagen, Vitamine und Provitamine, beispielsweise Vitamin A, E und C, Retinol, Bisabolol, Panthenol, natürliche und synthetische Lichtschutzmittel, Naturstoffe, Trübungsmittel, Lösungsvermittler, Repellentien, Bleichmittel, Färbemittel, Tönungsmittel, Bräunungsmittel (z.B. Dihydroxyaceton), Mikropigmente wie Titanoxid oder Zinkoxid, Überfettungsmittel, Perlglanzwachse, Konsistenzgeber, weitere Verdicker, Solubilisatoren, Komplexbildner, Fette, Wachse, Silikonverbindungen, Hydrotrope, Farbstoffe, Stabilisatoren, pH-Wert Regulatoren, Reflektoren, Proteine und Proteinhydrolysate (z.B. Weizen-, Mandel- oder Erbsenproteine), Ceramid, Eiweißhydrolysate, Salze, Gelbildner, Konsistenzgeber, Silikone, Feuchthaltemittel (z.B. 1,2-Pentandiol), Rückfetter, UV-Lichtschutzfilter und weitere übliche Additive. Des weiteren können zur Einstellung der jeweils gewünschten Eigenschaften insbesondere auch weitere Polymere enthalten sein.
Die erfindungsgemäßen kosmetischen Zubereitungen enthalten die erfindungsgemäßen Polymere in einer Menge von 0,01 bis 10 Gew.-%, bevorzugt 0,05 bis 5 Gew.-%, besonders bevorzugt 0,1 bis 1,5 Gew.-%, bezogen auf das Gewicht der Zubereitung. In einer bevorzugten Ausführungsform der Erfindung enthalten erfindungsgemäße Duschgele, Wasch-, Dusch- und Badepräparate sowie Shampoos und Haarpflegemittel weiterhin wenigstens ein Tensid.
In einer weiteren bevorzugten Ausführungsform der Erfindung enthalten erfindungsgemäße Shampoos und Haarpflegemittel neben den Polymeren weiterhin wenigstens eine Öl- und/oder Fettphase und ein Tensid.

### Tenside

Als Tenside können anionische, kationische, nichtionische und/oder amphotere Tenside eingesetzt werden. Vorteilhafte waschaktive anionische Tenside im Sinne der vorliegenden Erfindung sind
- Acylaminosäuren und deren Salze, wie Acylglutamate, insbesondere Natriumacylglutamat
- Sarcosinate, beispielsweise Myristoyl Sarcosin, TEA-Lauroyl Sarcosinat, Natriumlauroylsarcosinat und Natriumcocoylsarcosinat,
   Sulfonsäuren und deren Salze, wie
- Acylisethionate, beispielsweise Natrium- oder Ammoniumcocoylisethionat
- Sulfosuccinate, beispielsweise Dioctylnatriumsulfosuccinat, Dinatriumlaurethsulfosuccinat, Dinatriumlaurylsulfosuccinat und Dinatriumundecylenamido MEA-Sulfosuccinat, Dinatrium PEG-5 Laurylcitratsulfosuccinat und Derivate,
- Alkylethersulfate, beispielsweise Natrium-, Ammonium-, Magnesium-, MIPA-, TIPA-Laurethsulfat, Natriummyrethsulfat und Natrium C₁₂₋₁₃ Parethsulfat,
- Alkyethersulfonate, beispielsweise Natrium C12-15 Pareth-15 Sulfonat
- Alkylsulfate, beispielsweise Natrium-, Ammonium- und TEA-Laurylsulfat. Weitere vorteilhafte anionische Tenside sind
- Taurate, beispielsweise Natriumlauroyltaurat und Natriummethylcocoyltaurat,
- Ether-Carbonsäuren, beispielsweise Natriumlaureth-13 Carboxylat und Natrium PEG-6 Cocamide Carboxylat, Natrium PEG-7-Olivenöl-Carboxylat
- Phosphorsäureester und Salze, wie beispielsweise DEA-Oleth-10 Phosphat und Dilaureth-4 Phosphat,
- Alkylsulfonate, beispielsweise Natriumcocosmonoglyceridsulfat, Natrium C₁₂₋₁₄ Olefinsulfonat, Natriumlaurylsulfoacetat und Magnesium PEG-3 Cocamidsulfat,
- Acylglutamate wie Di-TEA-palmitoylaspartat und Natrium Caprylic/Capric Glutamat,
- Acylpeptide, beispielsweise Palmitoyl hydrolysiertes Milchprotein, Natrium Cocoyl hydrolysiertes Sojaprotein und Natrium-/Kalium Cocoyl hydrolysiertes Kollagen sowie Carbonsäuren und Derivate, wie beispielsweise Laurinsäure, Aluminiumstearat, Magnesiumalkanolat und Zinkundecylenat, Ester-Carbonsäuren, beispielsweise Calciumstearoyllactylat, Laureth-6 Citrat und Natrium PEG-4 Lauramidcarboxylat
- Alkylarylsulfonate.

Vorteilhafte waschaktive kationische Tenside im Sinne der vorliegenden Erfindung sind quaternäre Tenside. Quaternäre Tenside enthalten mindestens ein N-Atom, das mit 4 Alkyl- oder Arylgruppen kovalent verbunden ist. Vorteilhaft sind beispielsweise Alkylbetain, Alkylamidopropylbetain und Alkylamidopropylhydroxysultain. Weitere vorteilhafte kationische Tenside im Sinne der vorliegenden Erfindung sind ferner
- Alkylamine,
- Alkylimidazole und
- ethoxylierte Amine
und insbesondere deren Salze.
Vorteilhafte waschaktive amphotere Tenside im Sinne der vorliegenden Erfindung sind Acyl-/dialkylethylendiamine, beispielsweise Natriumacylamphoacetat, Dinatriumacylamphodipropionat, Dinatriumalkylamphodiacetat, Natriumacylamphohydroxypropylsulfonat, Dinatriumacylamphodiacetat, Natriumacylamphopropionat, und N-Kokosfettsäureamidoethyl-N-hydroxyethylglycinat Natriumsalze.
Weitere vorteilhafte amphotere Tenside sind N-Alkylaminosäuren, beispielsweise Aminopropylalkylglutamid, Alkylaminopropionsäure, Natriumalkylimidodipropionat und Lauroamphocarboxyglycinat.
Vorteilhafte waschaktive nicht-ionische Tenside im Sinne der vorliegenden Erfindung sind
- Alkanolamide, wie Cocamide MEA/DEA/MIPA,
- Ester, die durch Veresterung von Carbonsäuren mit Ethylenoxid, Glycerin, Sorbitan oder anderen Alkoholen entstehen,
- Ether, beispielsweise ethoxylierte Alkohole, ethoxyliertes Lanolin, ethoxylierte Polysiloxane, propoxylierte POE Ether, Alkylpolyglycoside wie Laurylglucosid, Decylglycosid und Cocoglycosid, Glycoside mit einem HLB-Wert von wenigstens 20 (z.B. Belsil^{®}SPG 128V (Wacker)).
Weitere vorteilhafte nicht-ionische Tenside sind Alkohole und Aminoxide, wie Cocoamidopropylamin-Oxid.

Bevorzugte anionische, amphotere und nichtionische Shampoo-Tenside sind beispielsweise in "Kosmetik und Hygiene von Kopf bis Fuß", Hrsg. W. Umbach, 3. Auflage, Wiley-VCH, 2004, S.131-134 genannt, worauf an dieser Stelle in vollem Umfang Bezug genommen wird.
Unter den Alkylethersulfaten sind insbesondere Natriumalkylethersulfate auf Basis von zwei- oder dreifach ethoxyliertem Lauryl- und Myristylalkohol bevorzugt. Sie übertreffen die Alkylsulfate deutlich bezüglich der Unempfindlichkeit gegen Wasserhärte, der Verdickbarkeit, der Kältelöslichkeit und insbesondere der Haut- und Schleimhautverträglichkeit. Sie können auch als alleinige Waschrohstoffe für Shampoos eingesetzt werden. Laurylethersulfat weist bessere Schaumeigenschaften als Myristylethersulfat auf, ist diesem aber in der Milde unterlegen.
Alkylethercarboxylate mit mittlerem und besonders mit höherem Ethoxylierungsgrad gehören zu den mildesten Tensiden überhaupt, zeigen aber ein schlechtes Schaum- und Viskositätsverhalten. Sie werden oft in Kombination mit Alkylethersulfaten und amphoteren Tensiden in Haarwaschmitteln eingesetzt.
Sulfobernsteinsäureester (Sulfosuccinate) sind mild und gut schäumende Tenside werden aber wegen ihrer schlechten Verdickbarkeit bevorzugt nur zusammen mit anderen anionischen und amphoteren Tensiden und wegen ihrer geringen Hydrolysestabilität bevorzugt nur in neutralen bzw. gut gepufferten Produkten eingesetzt. Amidopropylbetaine sind als alleinige Waschrohstoffe praktisch unbedeutend, da ihr Schaumverhalten sowie ihre Verdickbarkeit nur mäßig ausgeprägt sind. Demgegenüber weisen diese Tenside eine ausgezeichnete Haut- und Augenschleimhautverträglichkeit auf. In Kombination mit anionischen Tensiden lässt sich deren Milde synergistisch verbessern. Bevorzugt ist die Verwendung von Cocamidopropylbetain. Amphoacetate /Amphodiacetate besitzen als amphotere Tenside eine sehr gute Haut- und Schleimhautverträglichkeit und können haarkonditionierend wirken bzw. die Pflegewirkung von Zusatzstoffen erhöhen. Sie werden ähnlich wie die Betaine zur Optimierung von Alkylethersulfat-Formulierungen eingesetzt. Am meisten bevorzugt sind Natriumcocoamphoacetat und Dinatriumcocoamphodiacetat.
Alkylpolyglykoside sind nichtionische Waschrohstoffe. Sie sind mild, haben gute Universaleigenschaften, schäumen jedoch schwach. Aus diesem Grund werden sie bevorzugt in Kombinationen mit anionischen Tensiden verwendet.
Sorbitanester gehören ebenfalls zu den nichtionischen Waschrohstoffen. Wegen ihrer ausgezeichneten Milde werden sie bevorzugt zum Einsatz bei Baby-Shampoos verwendet. Als Schwachschäumer werden sie bevorzugt in Kombination mit anionischen Tensiden eingesetzt.

Es ist vorteilhaft, das oder die waschaktiven Tenside aus der Gruppe der Tenside zu wählen, welche einen HLB-Wert von mehr als 25 haben, besonders vorteilhaft sind solche, welchen einen HLB-Wert von mehr als 35 haben.
Es ist erfindungsgemäß von Vorteil, wenn ein oder mehrere dieser Tenside in einer Konzentration von 1 bis 30 Gewichts-%, bevorzugt in einer Konzentration von 5 bis 25 Gewichts-% und ganz besonders bevorzugt in einer Konzentration von 10 bis 20 Gewichts-%, jeweils bezogen auf das Gesamtgewicht der Zubereitung eingesetzt werden.

### Polysorbate

Als waschaktive Agentien können auch Polysorbate vorteilhaft in die erfindungsgemäßen Zubereitungen eingearbeitet werden.
Im Sinne der Erfindung vorteilhafte Polysorbate sind beispielsweise
- Polyoxyethylen(20)sorbitanmonolaurat (Tween^{®}20, CAS-Nr. 9005-64-5)
- Polyoxyethylen(4)sorbitanmonolaurat (Tween^{®}21, CAS-Nr. 9005-64-5)
- Polyoxyethylen(4)sorbitanmonostearat (Tween^{®}61, CAS-Nr. 9005-67-8)
- Polyoxyethylen(20)sorbitantristearat (Tween^{®}65, CAS-Nr. 9005-71 -4)
- Polyoxyethylen(20)sorbitanmonooleat (Tween^{®}80, CAS-Nr. 9005-65-6)
- Polyoxyethylen(5)sorbitanmonooleat (Tween^{®}81, CAS-Nr. 9005-65-5)
- Polyoxyethylen(20)sorbitantrioleat (Tween^{®}85, CAS-Nr. 9005-70-3).
Besonders vorteilhaft sind
- Polyoxyethylen(20)sorbitanmonopalmitat (Tween^{®}40, CAS-Nr. 9005-66-7) und
- Polyoxyethylen(20)sorbitanmonostearat (Tween^{®}60, CAS-Nr. 9005-67-8).

Die Polysorbate werden vorteilhaft in einer Konzentration von 0,1 bis 5 und insbesondere in einer Konzentration von 1,5 bis 2,5 Gew.-%, bezogen auf das Gesamtgewicht der Zubereitung einzeln oder als Mischung mehrerer Polysorbate, eingesetzt.

### Konditionierungsmittel

Als Konditionierungsmittel für die erfindungsgemäßen kosmetischen Zubereitungen werden bevorzugt diejenigen Konditionierungsmittel gewählt, die auf Seite 34, Zeile 24 bis Seite 37, Zeile 10 der WO 2006/106140 beschrieben sind. Auf den Inhalt der genannten Textstelle wird hiermit in vollem Umfang Bezug genommen.

### Rheologiemodifizierungsmittel

Im allgemeinen kann die Rheologie der erfindungsgemäßen Zubereitungen durch Zugabe der erfindungsgemäßen Polymere auf den gewünschten Wert eingestellt werden. Selbstverständlich können aber in den erfindungsgemäßen Zubereitungen zusätzlich weitere Verdickungsmittel verwendet werden. Für Gele, Shampoos und Haarpflegemittel geeignete Verdicker sind in "Kosmetik und Hygiene von Kopf bis Fuß", Hrsg. W. Umbach, 3. Auflage, Wiley-VCH, 2004, S.235-236 genannt, worauf an dieser Stelle vollumfänglich Bezug genommen wird.
Geeignete weitere Verdickungsmittel für die erfindungsgemäßen kosmetischen Zubereitungen sind beispielsweise auch auf Seite 37, Zeile 12 bis Seite 38, Zeile 8 der WO 2006/106140 beschrieben. Auf den Inhalt der genannten Textstelle wird hiermit in vollem Umfang Bezug genommen.

### Konservierungsmittel

Zusammensetzungen mit hohen Wassergehalten müssen zuverlässig vor Verkeimung geschützt sein. Die erfindungsgemäßen kosmetischen Zubereitungen enthalten bevorzugt auch Konservierungsmittel. Geeignete Konservierungsmittel für die erfindungsgemäßen kosmetischen Zusammensetzungen sind beispielsweise auf Seite 38, Zeile 10 bis Seite 39, Zeile 18 der WO 2006/106140 beschrieben. Auf den Inhalt der genannten Textstelle wird hiermit in vollem Umfang Bezug genommen.

Komplexbildner: Da die Rohstoffe und auch viele kosmetische Mittel selbst überwiegend in Stahlapparaturen hergestellt werden, können die Endprodukte Eisen(-Ionen) in Spurenmengen enthalten. Um zu verhindern, dass diese Verunreinigungen über Reaktionen mit Farbstoffen und Parfümölbestandteilen die Produktqualität nachteilig beeinflussen, werden Komplexbildner wie Salze der Ethylendiamintetraessigsäure, der Nitrilotriessigsäure, der Iminodibernsteinsäure oder Phosphate zugesetzt.

UV- Lichtschutzfilter: Um die in den erfindungsgemäßen Zusammensetzungen enthaltenen Inhaltsstoffe wie beispielsweise Farbstoffe und Parfümöle gegen Veränderungen durch UV-Licht zu stabilisieren, können UV- Lichtschutzfilter, wie z. B. Benzophenon-Derivate, eingearbeitet werden. Geeignete UV- Lichtschutzfilter für die erfindungsgemäßen kosmetischen Zusammensetzungen sind beispielsweise auf Seite 39, Zeile 20 bis Seite 41 Zeile 10 der WO 2006/106140 beschrieben. Auf den Inhalt der genannten Textstelle wird hiermit in vollem Umfang Bezug genommen.

Antioxidantien: Ein Gehalt der erfindungsgemäßen Zusammensetzungen an Antioxidantien ist im allgemeinen bevorzugt. Erfindungsgemäß können als Antioxidantien alle für kosmetische Anwendungen geeigneten oder gebräuchlichen Antioxidantien verwendet werden. Geeignete Antioxidantien für die erfindungsgemäßen kosmetischen Zusammensetzungen sind beispielsweise auf Seite 41, Zeile 12 bis Seite 42 Zeile 33 der WO 2006/106140 beschrieben. Auf den Inhalt der genannten Textstelle wird hiermit in vollem Umfang Bezug genommen.

Puffer: Puffer gewährleisten die pH-Wert-Stabilität der Zusammensetzungen. Überwiegend verwendet werden Citrat-, Lactat- und Phosphat-Puffer.

Lösungsvermittler: Sie werden eingesetzt, um pflegende Öle oder Parfümöle klar in Lösung zu bringen und auch in der Kälte klar in Lösung zu halten. Die gängigsten Lösungsvermittler sind ethoxylierte nichtionische Tenside, z. B. hydrierte und ethoxylierte Ricinusöle.

Keimhemmende Mittel: Weiterhin können auch keimhemmende Mittel eingesetzt werden. Dazu gehören generell alle geeigneten Konservierungsmittel mit spezifischer Wirkung gegen grampositive Bakterien, z.B. Triclosan (2,4,4'-Trichlor-2'-hydroxydiphenylether), Chlorhexidin (1,1'-Hexamethylenbis[5-(4-chlorphenyl)-biguanid) sowie TTC (3,4,4'-Trichlorcarbanilid). Quartäre Ammonium-Verbindungen sind prinzipiell ebenfalls geeignet und werden bevorzugt für desinfizierende Seifen und Waschlotionen verwendet. Auch zahlreiche Riechstoffe haben antimikrobielle Eigenschaften. Auch eine große Anzahl etherischer Öle bzw. deren charakteristische Inhaltsstoffe wie z.B. Nelkenöl (Eugenol), Minzöl (Menthol) oder Thymianöl (Thymol), zeigen eine ausgeprägte antimikrobielle Wirksamkeit.
Die antibakteriell wirksamen Stoffe werden in der Regel in Konzentrationen von ca. 0,1 bis 0,3 Gew.-% eingesetzt.

Dispergiermittel: Wenn in den erfindungsgemäßen Zusammensetzungen unlösliche Wirkstoffe, z.B. Antischuppenwirkstoffe oder Siliconöle, dispergiert und auf Dauer in Schwebe gehalten werden sollen, müssen Dispergiermittel und Verdicker wie z. B. Magnesium-Aluminium-Silicate, Bentonite, Fettacyl-Derivate, Polyvinylpyrrolidon oder Hydrokolloide, z. B. Xanthan Gum oder Carbomere, eingesetzt werden. Erfindungsgemäß sind Konservierungsmittel in einer Gesamtkonzentration von höchstens 2, bevorzugt höchstens 1,5 und besonders bevorzugt höchstens 1 Gewichts-%, bezogen auf das Gesamtgewicht der Zusammensetzung, enthalten.

Die Zusammensetzungen können außer den vorgenannten Substanzen gegebenenfalls die in der Kosmetik üblichen Zusatzstoffe, beispielsweise Parfüm, Farbstoffe, rückfettende Agentien, Komplexierungs- und Sequestrierungsagentien, Perlglanzagentien, Pflanzenextrakte, Vitamine, Wirkstoffe, Pigmente, die eine färbende Wirkung haben, weichmachende, anfeuchtende und/oder feuchthaltende Substanzen, oder andere übliche Bestandteile einer kosmetischen oder dermatologischen Formulierung wie Alkohole, Polyole, Polymere, organische Säuren zur pH-Wert-Einstellung, Schaumstabilisatoren, Elektrolyte, organische Lösemittel oder Silikonderivate enthalten.
Hinsichtlich der genannten, dem Fachmann bekannten weiteren Inhaltsstoffe für die Zusammensetzungen sei auf "Kosmetik und Hygiene von Kopf bis Fuß", Hrsg. W. Umbach, 3. Auflage, Wiley-VCH, 2004, S.123-128 verwiesen, worauf an dieser Stelle vollumfänglich Bezug genommen wird.

Die erfindungsgemäßen Zusammensetzungen wie Gele, Shampoos und Haarpflegemittel enthalten gegebenenfalls ethoxylierte Öle ausgewählt aus der Gruppe der ethoxylierten Glycerin-Fettsäureester, insbesondere bevorzugt PEG-10 Olivenölglyceride, PEG-11 Avocadoölglyceride, PEG-11 Kakaobutterglyceride, PEG-13 Sonnenblumenölglyceride, PEG-15 Glycerylisostearat, PEG-9 Kokosfettsäureglyceride, PEG-54 Hydriertes Ricinusöl, PEG-7 Hydriertes Ricinusöl, PEG-60 Hydriertes Ricinusöl, Jojobaöl Ethoxylat (PEG-26 Jojoba-Fett-Säuren, PEG-26 Jojobaalkohol), Glycereth-5 Cocoat, PEG-9 Kokosfettsäureglyceride, PEG-7 Glycerylcocoat, PEG-45 Palmkernölglyceride, PEG-35 Ricinusöl, Olivenöl-PEG-7 Ester, PEG-6 Caprylisäure/Caprinsäureglyceride, PEG-10 Olivenölglyceride, PEG-13 Sonnenblumenölglyceride, PEG-7 Hydriertes Ricinusöl, Hydrierte Palmkernölglycerid-PEG-6 Ester, PEG-20 Maisölglyceride, PEG- 18 Glyceryloleat-cocoat, PEG-40 Hydriertes Ricinusöl, PEG-40 Ricinusöl, PEG-60 Hydriertes Ricinusöl, PEG-60 Maisölglyceride, PEG-54 Hydriertes Ricinusöl, PEG-45 Palmkernölglyceride, PEG-80 Glycerylcocoat, PEG-60 Mandelölglyceride, PEG-60 "Evening Primrose" Glyceride, PEG-200 Hydriertes Glycerylpalmat, PEG-90 Glycerylisostearat.
Bevorzugte ethoxylierte Öle sind PEG-7 Glycerylcocoat, PEG-9 Kokosglyceride, PEG-40 Hydriertes Rizinusöl, PEG-200 hydriertes Glycerylpalmat.
Ethoxylierte Glycerin-Fettsäureester werden in wässrigen Reinigungsrezepturen zu verschiedenen Zwecken eingesetzt. Glycerin-Fettsäureester mit einem Ethoxylierungsgrad von ca. 30-50 dienen als Lösungsvermittler für unpolare Substanzen wie Parfumöle. Hochethoxylierte Glycerin-Fettsäureester werden als Verdicker eingesetzt.

### Wirkstoffe

In die erfindungsgemäßen Zusammensetzungen lassen sich Wirkstoffe mit unterschiedlicher Löslichkeit homogen einarbeiten. Vorteilhafte Wirkstoffe in den erfindungsgemäßen kosmetischen Zusammensetzungen sind beispielsweise auf Seite 44, Zeile 24 bis Seite 49 Zeile 39 der WO 2006/106140 beschrieben. Auf den Inhalt der genannten Textstelle wird hiermit in vollem Umfang Bezug genommen.

### UV-Lichtschutzmittel

Die erfindungsgemäßen Zusammensetzungen enthalten in einer bevorzugten Ausführungsform UV-Lichtschutzmittel zum Schutz der Haut und/oder der Haare. Geeignete UV-Lichtschutzmittel sind in der WO 2006/106114, S.24, Z.4 bis S.27, Z.27 ausführlich beschrieben, worauf hiermit in vollem Umfang Bezug genommen wird.
Vorteilhaft enthalten die Zusammensetzungen Substanzen, die UV-Strahlung im UVB-Bereich und Substanzen, die UV-Strahlung im UVA-Bereich absorbieren, wobei die Gesamtmenge der Filtersubstanzen z.B. 0,1 bis 30 Gew.-%, vorzugsweise 0,5 bis 20 Gew.-%, insbesondere 1 bis 15 Gew.-% beträgt, bezogen auf das Gesamtgewicht der Zusammensetzungen, um kosmetische Zusammensetzungen zur Verfügung zu stellen, welche die Haut vor dem gesamten Bereich der ultravioletten Strahlung schützen.
Der größte Teil der Lichtschutzmittel in den zum Schutz der menschlichen Epidermis dienenden kosmetischen oder dermatologischen Zusammensetzungen besteht aus Verbindungen, die UV-Licht im UV-B-Bereich absorbieren. Beispielsweise beträgt der Anteil der erfindungsgemäß zu verwendenden UV-A-Absorber 10 bis 90 Gew.-%, bevorzugt 20 bis 50 Gew.-% bezogen auf die Gesamtmenge von UV-B und UV-A absorbierenden Substanzen.

### Perlglanzwachse

Geeignete Perlglanzwachse für die erfindungsgemäßen kosmetischen Zusammensetzungen sind beispielsweise auf Seite 50, Zeile 1 bis Zeile 16 der WO 2006/106140 beschrieben. Auf den Inhalt der genannten Textstelle wird hiermit in vollem Umfang Bezug genommen.
Die erfindungsgemäßen Zusammensetzungen können weiterhin Glitterstoffe und/oder andere Effektstoffe (z.B. Farbschlieren) enthalten.

### Emulgatoren

Die erfindungsgemäßen kosmetischen Zusammensetzungen liegen in einer bevorzugten Ausführungsform der Erfindung in Form von Emulsionen vor. Die Herstellung solcher Emulsionen erfolgt nach bekannten Methoden. Geeignete Emulgatoren für die erfindungsgemäßen Emulsionen sind beispielsweise auf Seite 50, Zeile 18 bis Seite 53, Zeile 4 der WO 2006/106140 beschrieben. Auf den Inhalt der genannten Textstelle wird hiermit in vollem Umfang Bezug genommen.

### Parfümöle

Sollen den erfindungsgemäßen kosmetischen Zusammensetzungen Parfumöle zugesetzt werden, so sind geeignete Parfümöle beispielsweise auf Seite 53, Zeile 10 bis Seite 54, Zeile 3 der WO 2006/106140 beschrieben. Auf den Inhalt der genannten Textstelle wird hiermit in vollem Umfang Bezug genommen.

### Pigmente

Gegebenenfalls enthalten die erfindungsgemäßen kosmetischen Zusammensetzungen weiterhin Pigmente. Die Pigmente liegen im Produkt meist in ungelöster Form vor und können in einer Menge von 0,01 bis 25 Gew.%, besonders bevorzugt von 0,5 bis15 Gew.% enthalten sein. Die bevorzugte Teilchengröße beträgt 0,01 bis 200 µm, insbesondere 0,02 bis 150 µm, besonders bevorzugt 0,05 bis 100 µm.
Geeignete Pigmente für die erfindungsgemäßen Zusammensetzungen sind beispielsweise auf Seite 54, Zeile 5 bis Seite 55, Zeile 19 der WO 2006/106140 beschrieben. Auf den Inhalt der genannten Textstelle wird hiermit in vollem Umfang Bezug genommen.

### Nanopartikel

Gegebenenfalls enthalten die erfindungsgemäßen Zusammensetzungen wasserunlösliche Nanopartikel, also Teilchen mit einer Teilchengröße im Bereich von 1 bis 200, bevorzugt von 5 bis 100 nm. Bevorzugte Nanopartikel sind Nanopartikel von Metalloxiden, insbesondere von Zinkoxid und/oder Titandioxid.

### Polymere

Die erfindungsgemäßen kosmetischen Zusammensetzungen enthalten in einer bevorzugten Ausführungsform außer den erfindungsgemäßen Polymeren noch weitere Polymere. Bevorzugte weitere Polymere sind wasserlösliche bzw. wasserdispergierbare Polymere, wobei wasserlösliche Polymere besonders bevorzugt sind.
Für die erfindungsgemäßen Zusammensetzungen geeignete weitere Polymere sind beispielsweise auf Seite 55, Zeile 21 bis Seite 63, Zeile 2 der WO 2006/106140 beschrieben. Auf den Inhalt der genannten Textstelle wird hiermit in vollem Umfang Bezug genommen.

Shampoo-Typen

Eine bevorzugte Ausführungsform der Erfindung sind Haar-Shampoos enthaltend die erfindungsgemäßen Polymere. An Shampoos werden je nach Haarqualität oder Kopfhautproblem gegebenenfalls zusätzliche Anforderungen gestellt. Die Wirkungsweise der bevorzugten Shampoo-Typen mit den wichtigsten zusätzlichen Wirkungen bzw. wichtigsten speziellen Zielsetzungen wird nachfolgend beschrieben. Erfindungsgemäß bevorzugt sind beispielsweise Shampoos für normales bzw. schnell fettendes bzw. geschädigtes Haar, Antischuppenshampoos, Babyshampoos und 2-in-1-Shampoos (also Shampoo und Spülung in einem).
Erfindungsgemäße Shampoos für normales Haar: die Haarwäsche soll Haar und Kopfhaut von dem in Talgdrüsen gebildeten Hautfett, den aus Schweissdrüsen mit Wasser austretenden anorganischen Salzen, Aminosäuren, Harnstoff und Milchsäure, abgeschilferten Hautpartikeln, Umweltschmutz, Gerüchen und gegebenenfalls Rückständen haarkosmetischer Behandlungen befreien. Normales Haar bedeutet kurzes bis schulterlanges Haar, welches nur schwach geschädigt ist. Dementsprechend soll der Anteil an Konditionierhilfsstoffen auf diesen Haartyp optimiert sein.
Erfindungsgemäße Shampoos für schnell fettendes Haar: eine erhöhte Fettproduktion der Talgdrüsen der Kopfhaut führt bereits 1-2 Tage nach der Haarwäsche zu einer strähnigen, unansehnlichen Frisur. Öl- und wachsartige Hautfettbestandteile beschweren das Haar und mindern die Reibung von Haar zu Haar und verringern damit den Frisurenhalt. Das eigentliche haarkosmetische Problem bei schnell fettenden Haaren ist also das vorzeitige Zusammenfallen voluminöser Frisuren. Um dies zu vermeiden, muss man verhindern, dass die Haaroberfläche beschwert und zu glatt und geschmeidig wird. Dies wird bevorzugt durch die Tensidgrundlage aus gut reinigenden und besonders wenig substantiv ausgeprägten Waschrohstoffen erreicht. Zusätzliche Pflegestoffe, die sich zum Hautfett addieren würden, wie rückfettende Substanzen werden in Shampoos für schnell fettendes Haar nicht oder nur mit größter Vorsicht eingesetzt. Erfindungsgemäße volumengebende Shampoos für feines Haar können vergleichbar formuliert werden.
Erfindungsgemäße Shampoos für trockenes, strapaziertes (geschädigtes) Haar: Die Struktur des Haares wird im Laufe des Haarwachstums durch mechanische Einflüsse wie Kämmen, Bürsten und vor allen Dingen Toupieren (Kämmen gegen die Wuchsrichtung), durch die Einwirkung von UV-Strahlung bzw. sichtbarem Licht und durch kosmetische Behandlungen, wie Dauerwellen, Blondierung oder Färbung verändert. Die Schuppenschicht der Haare weist von der Wurzel bis zur Spitze ein zunehmend strapazierteres Aussehen auf; in Extremfällen ist sie an der Spitze völlig abgetragen, und die Haarspitzen sind gespalten (Haarspliss). Geschädigtes Haar kann grundsätzlich nicht mehr in den Zustand des gesunden Haarnachwuchses zurückgeführt werden. Es gelingt aber, diesem Idealzustand hinsichtlich Griff, Glanz und Kämmbarkeit durch Verwendung von erfindungsgemäßen Shampoos mit gegebenenfalls hohen Anteilen an pflegenden Stoffen (Konditioniermitteln) sehr nahe zu kommen.
Eine noch bessere haarkonditionierende Wirkung als mit einem Shampoo wird mit einem erfindungsgemäßen Haarpflegemittel beispielsweise in Form einer Spülungs- oder Kurmittelbehandlung nach der Haarwäsche erreicht. Spülungs- oder Kurmittel für Haare, die erfindungsgemäße Polymere enthalten, sind ebenfalls erfindungsgemäß. Erfindungsgemäße 2-in-1- Shampoos sind besonders stark pflegende Shampoos, bei denen durch die Konzipierung als "Shampoo und Spülung in einem" der Zusatznutzen Pflege gleichwertig neben den Grundnutzen Reinigung gestellt wird. Erfindungsgemäße 2-in-1-Zusammensetzungen enthalten erhöhte Mengen an Konditioniermitteln. Antischuppenshampoos: Erfindungsgemäße Antischuppenshampoos haben im Vergleich zu Antischuppenhaarwässern den Vorteil, dass sie nicht nur durch entsprechende Wirkstoffe gegen Schuppenbefall die Bildung neuer sichtbarer Schuppen verringern und bei langfristiger Anwendung verhindern, sondern mit der Haarwäsche auch bereits abgeschilferte Schuppen entfernen. Nach dem Ausspülen der Waschflotte bleibt allerdings nur ein geringer, jedoch ausreichender Anteil der Wirkstoffe auf Kopfhaut und Haar zurück. Es gibt verschiedene Antischuppen-Wirkstoffe, die in die erfindungsgemäßen Shampoo-Zusammensetzungen eingearbeitet werden können, wie z. B. Zinkpyrithion, Ketokonazol, Elubiol, Clotrimazol, Climbazol oder Pirocton Olamin. Zusätzlich weisen diese Substanzen eine die Abschilferung normalisierende Wirkung auf.
Die Grundlage von Antischuppenshampoos entspricht überwiegend der Formulierung von Shampoos für normales Haar mit gutem Reinigungseffekt.
Babyshampoos: bei einer bevorzugten Ausführungsform der Erfindung handelt es sich bei den erfindungsgemäßen Shampoo-Zubereitungen um Babyshampoos. Diese sind optimal haut- und schleimhautverträglich. Kombinationen von Waschrohstoffen mit sehr guter Hautverträglichkeit bilden die Basis dieser Shampoos. Zusätzliche Stoffe zur weiteren Verbesserung der Haut- und Schleimhautverträglichkeit und der Pflegeeigenschaften werden vorteilhaft zugefügt, wie z. B. nichtionische Tenside, Proteinhydrolysate und Panthenol oder Bisabolol. Alle notwendigen Rohstoffe und Hilfsstoffe, wie Konservierungsmittel, Parfümöle, Farbstoffe usw., werden unter dem Aspekt einer hohen Verträglichkeit und Milde ausgewählt.
Shampoos für trockene Kopfhaut: bei einer weiteren bevorzugten Ausführungsform der Erfindung handelt es sich bei den erfindungsgemäßen Shampoo-Zubereitungen um Shampoos für trockene Kopfhaut. Das primäre Ziel dieser Shampoos ist die Verhinderung der Austrocknung der Kopfhaut, da trockene Kopfhaut zu Juckreiz, Rötung und Entzündung führen kann. Wie auch bei den Babyshampoos bilden Kombinationen von Waschrohstoffen mit sehr guter Hautverträglichkeit die Basis dieser Shampoos. Zusätzlich können gegebenenfalls Rückfetter und Feuchthaltemittel, wie z. B. Glycerin oder Harnstoff, eingesetzt werden.
Die erfindungsgemäßen Shampoo-Zusammensetzungen können auch als Shampookonzentrate mit erhöhten Tensidgehalten von 20-30 Gew.-% vorliegen. Sie basieren auf speziellen Waschrohstoffkombinationen und Konsistenzregulatoren, die die gute Verteilbarkeit und das spontane Anschäumvermögen auch einer kleinen Anwendungsmenge gewährleisten. Ein besonderer Vorteil ist beispielsweise die Möglichkeit, die Ergiebigkeit von 200 ml Shampoo mit einer 100-ml-Flasche zu erreichen.

### Darreichung

Es ist vorteilhaft, wenn die erfindungsgemäßen Zusammensetzungen in einer Flasche oder Quetschflasche aufbewahrt und aus dieser heraus angewendet werden. Demzufolge sind auch Flaschen oder Quetschflaschen, welche eine erfindungsgemäße Zusammensetzung enthalten, erfindungsgemäß.

Die erfindungsgemäßen Polymere, wie zuvor definiert, können bevorzugt in Shampooformulierungen insbesondere als Konditioniermittel eingesetzt werden. Bevorzugte Shampooformulierungen enthalten
a) 0,05 bis 10 Gew.-% wenigstens eines erfindungsgemäßen Polymers,
b) 25 bis 94,95 Gew.-% Wasser,
c) 5 bis 50 Gew.-% Tenside,
d) 0 bis 5 Gew.-% eines Konditioniermittels,
e) 0 bis 10 Gew.-% weitere kosmetische Bestandteile.

In den Shampooformulierungen können alle in Shampoos üblicherweise eingesetzten anionischen, neutralen, amphoteren oder kationischen Tenside verwendet werden. Geeignete Tenside wurden vorstehend genannt.

In den Shampooformulierungen können zur Erzielung bestimmter Effekte übliche Konditioniermittel in Kombination mit den erfindungsgemäßen Polymeren eingesetzt werden. Hierzu zählen beispielsweise kationische Polymere mit der Bezeichnung Polyquaternium nach INCI, insbesondere Copolymere aus Vinylpyrrolidon/N-Vinylimidazoliumsalzen (Luviquat^{®}FC, Luviquat^{®}HM, Luviquat^{®}MS, Luviquat^{®}Care), Copolymere aus N-Vinylpyrrolidon/Dimethylaminoethylmethacrylat, quaternisiert mit Diethylsulfat (Luviquat^{®}PQ 11), Copolymere aus N-Vinylcaprolactam/N-Vinylpyrrolidon/N-Vinylimidazoliumsalzen (Luviquat^{®}Hold); kationische Cellulosederivate (Polyquaternium-4 und -10), Acrylamidcopolymere (Polyquaternium-7). Vorteilhafte Konditionierungsmittel stellen beispielsweise die nach INCI als Polyquaternium bezeichneten Verbindungen dar (insbesondere Polyquaternium-1 bis Polyquaternium-87). Die folgende Tabelle gibt eine nicht abschließende Übersicht über Konditioniermittel, die in Kombination mit den erfindungsgemäßen Polymeren eingesetzt werden:

| **Bezeichnung nach INCI** | **CAS-Nummer** | **Polymertyp** | **Beispiel (Handelsname)** |
|---|---|---|---|
| Polyquaternium-2 | CAS 63451-27-4 | Urea, N, N', bis [3-(dimethylamino)propyl]-polymer mit 1, 1'- oxybis (2-chloroethan) | Mirapol® A-15 |
| Polyquaternium-5 | CAS 26006-22-4 | Acrylamid, ß-Methacryloxyethyltriethyl-ammoniummethosulfat | |
| Polyquaternium-6 | CAS 26062-79-3 | N,N-Dimethyl-N-2-propenyl-2-propenaminiumchlorid (PolyDADMAC) | Merquat® 100 |
| Polyquaternium-7 | CAS 26590-05-6 | N,N-Dimethyl-N-2-propenyl-2-propenaminiumchlorid, 2-Propenamid | Merquat® S |
| Polyquaternium-10 | CAS 53568-66-4, 55353-19-0, 54351-50-7, 68610-92-4, 81859-24-7 | Quaternäres Ammoniumsalz der Hydroxyethylcellulose | Celquat® SC-230M, Polymer JR 400 |
| Polyquaternium-11 | CAS 53633-54-8 | Vinylpyrrolidon/dimethylaminoethyl-Methacrylat-Copolymer/Diethylsulfat-Reaktionsprodukt | Gafquat® 755N |
| Polyquaternium-16 | CAS 29297-55-0 | Vinylpyrrolidon/vinylimidazolinum-methochlorid-Copolymer | Luviquat® HM552 |
| Polyquaternium-17 | CAS 90624-75-2 | | Mirapol® AD-1 |
| Polyquaternium-19 | CAS 110736-85-1 | Quaternisierter wasserlöslicher Polyvinylalkohol | |
| Polyquaternium-20 | CAS 110736-86-2 | In Wasser dispergierbarer quaternisierter Polyvinyloctadecylether | |
| Polyquaternium-21 | | Polysiloxanpolydimethyldimethylammoniumacetat-Copolymer | Abil® B 9905 |
| Polyquaternium-22 | CAS 53694-17-0 | Dimethyldiallylammoniumchlorid/Acrylsäure-Copolymer | Merquat® 280 |
| Polyquaternium-24 | CAS 107897-23-5 | Polymeres quaternäres Ammoniumsalz der Hydroxyethylcellulose | Quartisoft® LM-200 |
| Polyquaternium-28 | CAS 131954-48-8 | Vinylpyrroldon/Methacrylamidopropyltrimethylammoniumchlorid-Copolymer | Gafquat® HS-100 |
| Polyquaternium-29 | CAS 92091-36-6, 148880-30-2 | Chitosan, das mit Propylenoxid umgesetzt u. mit Epichlorhydrin quaternisiert wurde | Lexquat® CH |
| Polyquaternium-31 | CAS 136505-02-7, 139767-67-7 | Polymeres, quaternäres Ammoniumsalz, das durch die Umsetzung von DMAPA-Acrylate/Acrylsäure/ Acrylonitrogens-Copolymeren u. Diethylsulfat hergestellt wird | Hypan ® QT 100 |
| Polyquaternium-32 | CAS 35429-19-7 | N,N,N-Trimethyl-2- [(2-methyl-1-oxo-2-propenyl)oxy]-ethanaminium chlorid, polymer mit 2-Propenamid | |
| Polyquaternium-37 | CAS 26161-33-1 | | |
| Polyquaternium-44 | | Copolymeres quaternes Ammoniumsalz aus Vinylpyrrolidon und quaternisiertem Imidazolin | |

Ferner können Eiweißhydrolysate verwendet werden, sowie konditionierende Substanzen auf Basis von Silikonverbindungen, beispielsweise Polyalkylsiloxane, Polyarylsiloxane, Polyarylalkylsiloxane, Polyethersiloxane oder Silikonharze. Weitere geeignete Silikonverbindungen sind Dimethicon Copolyole (CTFA) und aminofunktionelle Silikonverbindungen wie Amodimethicone (CTFA).

### Seifen und Syndets

Weitere erfindungsgemäße Zusammensetzungen, die die erfindungsgemäßen Polymere enthalten, sind beispielsweise Seifen und Syndets.
Seife entsteht bei der Reaktion eines (Neutral-)Fettes oder daraus gewonnener Fettsäuren bzw. Fettsäuremethylester mit Natron- oder Kalilauge (Verseifung"). Seife ist in der Zusammensetzung chemisch das Alkalisalz von Fettsäuren. Als Neutralfette werden üblicherweise Rindertalg oder Palmöl im Gemisch mit Kokosöl oder Palmkernöl und - seltener - andere natürliche Öle oder Fette bei der Seifenherstellung eingesetzt, wobei die Qualität der Ausgangsfette stark mitbestimmend für die Güte der daraus gewonnenen Seife ist.
Wichtig für die Auswahl der Fettkomponenten ist die Verteilung der Kettenlängen der entsprechenden Fettsäuren. Gefragt sind normalerweise vor allem C12-C18-Fettsäuren. Da Lauratseife besonders gut schäumt, werden üblicherweise das laurinreiche Kokosöl oder das ähnlich aufgebaute Palmkernöl in höheren Anteilen (bis zu 50% des Neutralfettgemisches) für Seifen verwendet, bei denen viel Schaum bei der Benutzung erwünscht ist.
Die Natriumsalze der genannten Fettsäuregemische sind fest, die Kaliumsalze dagegen weich und pastös. Aus diesem Grunde wird als Laugenkomponente zur Herstellung fester Seifen vorzugsweise Natronlauge, für flüssig-pastöse Seifen vorzugsweise Kalilauge verwendet. Bei der Verseifung wird das Verhältnis von Lauge zu Fettsäure so gewählt, dass allenfalls ein minimaler Überschuss an Lauge (max.0,05 %) im fertigen Seifenstück vorhanden ist.

Zu den Seifen werden üblicherweise Toilette-, Kern-, Transparent-, Luxus-, Creme-, Frische-/Deo-, Baby-, Hautschutz-, Abrasiv-, Schwimm- und Flüssigseifen sowie Waschpasten und Seifenblättchen gezählt.

Erfindungsgemäße Seifen enthalten neben den erfindungsgemäßen Polymeren vorteilhafterweise weiterhin Antioxidantien, Komplexierungs- und Feuchthaltemittel sowie gegebenenfalls Duftstoffe, Farbstoffe und weitere, kosmetisch akzeptable Inhaltsstoffe. Solche weiteren geeigneten Inhaltsstoffe sind vorstehend genannt.

Syndets (von engl. synthetic detergent) sind Alternativen zu den herkömmlichen Seifen, die durch die gegenüber der Seife unterschiedliche Zusammensetzung gewisse Vorteile aufweist, wo Seife eher Nachteile besitzt.

Syndets enthalten als Schaum- und Reinigungskomponenten waschaktive Substanzen (Tenside), die durch chemische Synthese gewonnen werden. Seifen dagegen sind - wie beschrieben - Salze natürlich vorkommender Fettsäuren. Für Syndets werden hautmilde, biologisch gut abbaubare Tenside verwendet, vorzugsweise Fettsäure-Isethionate (Sodium Cocoyl Isethionate), Sulfobernsteinsäure-Halbester (Disodium Lauryl Sulfosuccinate), Alkylpolyglucoside (Decyl Glucoside), Amphotertenside (z. B. Sodium Cocoamphoacetate). Daneben spielen Monoglycerid-Sulfat und Ethercarboxylate vereinzelt eine Rolle. Fettalkoholsulfat (z. B. Sodium Lauryl Sulfate) hat seine einstige Bedeutung als Basistensid für Syndets weitestgehend verloren. Die Basistenside werden mit Gerüstsubstanzen, Rückfettungsmitteln und weiteren Zusätzen zu Formulierungen kombiniert, die sich nach üblicher Seifentechnologie verarbeiten lassen und Stücke ergeben, die sich möglichst "seifenähnlich", aber ohne die erwähnten Nachteile der Seife verhalten. Sie schäumen bei jeder Wasserhärte und besitzen eine sehr gute Reinigungskraft. Ihr pH-Wert ist in einem breiten Bereich (meist zwischen 4 und 8) einstellbar.
Aufgrund der intensiveren Reinigungs-/Entfettungskraft der Basistenside ist der Tensidanteil im Syndet gewöhnlich deutlich geringer, der Anteil an Überfettungsmitteln deutlich höher als in Seifen, ohne dass das Schaumvermögen herabgesetzt wird. Syndets werden speziell zur Reinigung der sensiblen Haut, der jugendlich-unreinen Haut und zur Gesichtswäsche empfohlen.

Neben den (seifenfreien) Syndets findet man auch das Marktsegment der Halb- oder Combars (abgeleitet von Combination bar). Dabei handelt es sich um Stücke, die sowohl Seife als auch Syndettenside enthalten. Combars enthalten 10 bis 80 Gew.-% Seife. Sie stellen für die Kriterien Kosten, Schaumvermögen, Hautgefühl und Verträglichkeit einen Kompromiss zwischen Seifen und Syndets dar. Beim Waschen mit einem Combar stellt sich, abhängig von seinem Seifenanteil, ein pH-Wert von ca. 7 bis 9 ein.

Hinsichtlich dem Fachmann bekannter, möglicher Rezepturen für Seifen und Syndets sei auf "Kosmetik und Hygiene von Kopf bis Fuß", Hrsg. W. Umbach, 3. Auflage, Wiley-VCH, 2004, S.112-122 verwiesen, worauf an dieser Stelle vollumfänglich Bezug genommen wird.

### Duschbad- und Badeprodukte

Hinsichtlich spezieller Zusammensetzungen für Duschbad- und Badeprodukte oder Waschlotionen sei auf "Kosmetik und Hygiene von Kopf bis Fuß", Hrsg. W. Umbach, 3. Auflage, Wiley-VCH, 2004, S.128-134 verwiesen, worauf an dieser Stelle vollumfänglich Bezug genommen wird.

Ein weiterer Gegenstand der Erfindung ist die Verwendung eines erfindungsgemäßen Polymers als Verdickungsmittel in der Pharmazie zur Modifizierung rheologischer Eigenschaften.

Die erfindungsgemäßen Polymere sind weiterhin insbesondere als Verdickungsmittel in Haargelen, insbesondere sogenannten Stylinggelen geeignet. Eine erfindungsgemäß für Styling-Gele geeignete Zubereitung kann beispielsweise wie folgt zusammengesetzt sein:

| | | |
|---|---|---|
| a) | 60 - 99,85 Gew.-% | Wasser und/oder Alkohol |
| b) | 0,05 - 10 Gew.-% | eines erfindungsgemäßen Polymers |
| c) | 0 - 20 Gew.-% | weitere Bestandteile |

Die erfindungsgemäßen Polymere können als Gelbildner alleine oder gemeinsam mit weiteren, üblichen Gelbildner eingesetzt werden. Solche weiteren, üblichen Gelbildner sind leicht vernetzte Polyacrylsäure, beispielsweise Carbomer (INCI), Cellulosederivate, z.B. Hydroxypropylcellulose, Hydroxyethylcellulose, kationisch modifizierte Cellulosen, Polysaccharide, z.B. Xanthum Gummi, Caprylic/Capric Triglyceride, Sodium acrylates Copolymer, Polyquaternium-32 (and) Paraffinum Liquidum (INCI), Sodium Acrylates Copolymer (and) Paraffinum Liquidum (and) PPG-1 Trideceth-6, Acrylamidopropyl Trimonium Chloride/Acrylamide Copolymer, Steareth-10 Allyl Ether Acrylates Copolymer, Polyquaternium-37 (and) Paraffinum Liquidum (and) PPG-1 Trideceth-6, Polyquaternium 37 (and) Propylene Glycole Dicaprate Dicaprylate (and) PPG-1 Trideceth-6, Polyquaternium-7, Polyquaternium-44.

### Beispiele

Bedeutung der Abkürzungen/Handelsnamen:

| | |
|---|---|
| AS | Acrylsäure |
| MAS | Methacrylsäure |
| VP | N-Vinylpyrrolidon |
| VI | N-Vinylimidazol |
| HEMA | Hydroxyethylmethacrylat |
| Plex^{®}6877 | O 25% ige Lösung von C₁₈-Alkyl-PEG₁₁₀₀-Methacrylat in Methylmethacrylat (Degussa) |
| Trigonox^{®}101 | 2,5-Dimethyl-2,5-di(tert-butylperoxy)hexan |
| TBPOC | Tert.-Butylperoctoat |

### Herstellung der Copolymere

Beispielhaft sei hier die Herstellung des Copolymers Beispiel 5 beschrieben: Poly(VP/ VI / AS/ PLEX^{®}6877 O) 50/5/35/ /10 (Gewichtsverhältnis))

| | | |
|---|---|---|
| Vorlage: | 412 g | Butylacetat |
| | 0,15 g | Trigonox^{®}101 |
| Zulauf 1: | 75g | Vinylpyrrolidon |
| | 7,5g | Vinylimidazol |
| | 52,5g | Acrylsäure |
| | 15,0g | Plex^{®}6877 O |
| Zulauf 2: | 40g | Butylacetat |
| | 0,10g | tert.-Butylperoctoat |
| Zulauf 3: | 100g | Butylacetat |
| | 0,15g | tert.-Butylperoctoat |
| | 0,10g | Trigonox^{®}101 |

In einer Rührapparatur mit Rückflusskühler, Innenthermometer und vier Zulaufvorrichtungen wurden bei 87 - 88 °C Zulauf 1 und Zulauf 2 in zwei Stunden zugegeben. Das Reaktionsgemisch wurde bei ca. 88°C 3 Stunden weiter gerührt. Zulauf 3 wurde während 30 Minuten zudosiert und die entstandene Mischung weitere 3 Stunden bei 90°C gerührt. Danach wurde die Reaktionsmischung bei 120°C für 2 Stunden nachpolymerisiert. Nach dem Abkühlen auf ca. 40°C wurde das ausgefallene weiße Polymerpulver über eine Filternutsche abgesaugt, zwei Mal mit Aceton gewaschen und bei 40°C unter Vakuum getrocknet.

Nach dieser Vorschrift wurden auch die übrigen Polymere der folgenden Tabelle hergestellt.

Die Mengenangaben der folgenden Tabelle sind Gew.-%

| Beispiel | VP | VI | AS | MAS | HEMA | Plex^{®}6877 O |
|---|---|---|---|---|---|---|
| 1 | 98,5 | 1 | -- | 0,5 | -- | -- |
| 2 | 95 | 4,5 | -- | 0,5 | -- | -- |
| 3 | 86 | 12 | -- | 2 | -- | -- |
| 4 | 80 | 5 | -- | 15 | -- | -- |
| 5 | 50 | 5 | 35 | -- | -- | 10 |
| 6 | 50 | 36 | -- | 4 | -- | 10 |
| 7 | 73 | 2 | 15 | -- | 10 | -- |
| 8 | 73 | 2 | -- | 15 | 10 | -- |
| 9 | 63 | 2 | 15 | -- | 10 | -- |
| 10 | 45 | 5 | 20 | -- | 30 | -- |
| 11 | 42 | 3 | 35 | -- | 20 | -- |
| 12 | 40 | -- | 40 | -- | 10 | 10 |

## Patentansprüche

1. Polymere erhältlich durch Fällungspolymerisation einer Monomermischung, die umfasst
a) 30 bis 99 Gew.-% wenigstens eines nichtionischen wasserlöslichen Monomers
b) wenigstens ein von a) verschiedenes Monomer ausgewählt aus
i) anionischen Monomeren,
ii) Mischungen aus i) und wenigstens eine Hydroxylgruppe tragenden Monomeren,
c) gegebenenfalls ein wenigstens eine Aminogruppe tragendes Monomer,
d) gegebenenfalls weitere Monomere,
wobei die Gesamtmenge von a), b), c) und d) 100 Gew.-% beträgt und wobei die Monomermischung, bezogen auf die Gesamtmenge von a), b), c) und d) weniger als 0,1 Gew.-% eines Monomeren mit wenigstens 2 radikalisch polymerisierbaren Doppelbindungen pro Molekül enthält.

2. Polymere nach Anspruch 1, wobei die Monomermischung umfasst
a) 30 bis 99 Gew.-% wenigstens eines nichtionischen wasserlöslichen Monomers
b) wenigstens ein von a) verschiedenes Monomer ausgewählt aus
i) anionischen Monomeren,
ii) Mischungen aus und wenigstens eine Hydroxylgruppe tragenden Monomeren,
mit der Maßgabe, dass die Monomermischung weiterhin
c) wenigstens ein wenigstens eine Aminogruppe tragendes Monomer enthält,
d) gegebenenfalls weitere Monomere,
wobei die Gesamtmenge von a), b), c) und d) 100 Gew.-% beträgt und wobei die Monomermischung, bezogen auf die Gesamtmenge von a), b), c) und d) weniger als 0,1 Gew.-% eines Monomeren mit wenigstens 2 radikalisch polymerisierbaren Doppelbindungen pro Molekül enthält.

3. Polymere nach einem der Ansprüche 1 oder 2, wobei die Monomermischung umfasst
a) 30 bis 85 Gew.-% wenigstens eines nichtionischen wasserlöslichen Monomers,
b) wenigstens ein anionisches Monomer,
c) wenigstens eine radikalisch polymerisierbare Imidazol-Verbindung,
d) gegebenenfalls weitere Monomere d),
wobei
- die Gesamtmenge von a), b), c) und d) 100 Gew.-% beträgt und
- die Monomermischung, bezogen auf die Gesamtmenge von a), b), c) und d), weniger als 0,1 Gew.-% eines Monomeren mit wenigstens 2 radikalisch polymerisierbaren Doppelbindungen pro Molekül enthält und
- die Gesamtmenge von b) + c), bezogen auf die Gesamtmenge von a), b), c) und d), im Bereich von 15 bis 70 Gew.-% beträgt und
- das Verhältnis der Molmengen von b) zu c) nicht im Bereich von 1:2 bis 2:1 liegt.

4. Polymere nach einem der Ansprüche 1 bis 3, wobei a) ausgewählt ist aus der Gruppe bestehend aus N-Vinyllactamen und deren Derivaten, N-Vinylamiden gesättigter C₁-C₈-Monocarbonsäuren, primären Amiden α,β-ethylenisch ungesättigter Monocarbonsäuren und deren N-Alkyl- und N,N-Dialkylderivaten, die zusätzlich zu dem Carbonyl-Kohlenstoffatom der Amidgruppe höchstens 8 weitere Kohlenstoffatome aufweisen, Estern α,β-ethylenisch ungesättigter Mono- und Dicarbonsäuren mit Diolen, Amiden α,β-ethylenisch ungesättigter Mono- und Dicarbonsäuren mit Aminoalkoholen, die eine primäre oder sekundäre Aminogruppe aufweisen, Polyetheracrylaten und Mischungen davon.

5. Polymere nach einem der Ansprüche 1 bis 4, wobei a) ausgewählt ist aus der Gruppe bestehend aus N-Vinylpyrrolidon, N-Vinylcaprolactam, (Meth)acrylamid und N-Vinylformamid.

6. Polymere nach einem der Ansprüche 1 bis 5, wobei b) (Meth)acrylsäure ist oder umfasst.

7. Polymere nach einem der Ansprüche 1 bis 6, wobei c) N-Vinylimidazol ist oder umfasst.

8. Polymere nach einem der Ansprüche 1 bis 7, wobei d) ein Polyether(meth)acrylat ist oder umfasst.

9. Polymere nach einem der Ansprüche 1 bis 8, wobei die Monomermischung umfasst
a) 30 bis 85 Gew.-% von Monomer a)
b) 3 bis 40 Gew.-% von Monomer b)
c) 3 bis 40 Gew.-% von Monomer c)
d) 0,1 bis 15 Gew.-% von Monomer d).

10. Verwendung der Polymere gemäß einem der Ansprüche 1 bis 9 als Verdickungsmittel.

11. Verwendung der Polymere gemäß einem der Ansprüche 1 bis 9 in kosmetischen Zubereitungen.

12. Kosmetische Zubereitung enthaltend wenigstens eines der Polymere gemäß einem der Ansprüche 1 bis 9.
